# EUROPEAN PATENT APPLICATION

(11) **EP 4 280 160 A1**
(43) Date of publication of application: **22.11.2023**
(21) Application number: 22739455.8
(22) Date of filing: 13.01.2022
(51) Int. Cl.: G06T 13/40, G06T 1/40

(54) **INFORMATION PROCESSING PROGRAM AND INFORMATION PROCESSING DEVICE**

(30) Priority: 15.01.2021 JP 2021005321
(71) Applicant: SoftBank Corp., Tokyo 105-7529 (JP)
(72) Inventor: ISHIWAKA, Yuko, Tokyo 105-7529 (JP)
(74) Representative: SSM Sandmair
(86) International application number: PCT/JP2022/000961
(87) International publication number: WO 2022/154050

(57) **Abstract**

An information processing program causes a computer to execute a generation process of generating a simulation video that shows a movement of a subject by changing a posture over time according to a musical score based on posture dictionary information in which posture information indicating a posture of a skeleton model expressing a skeleton of the subject and music information indicating music notation in a musical score corresponding to an existing musical composition are associated with each other.

## Description

### Field

The present invention relates to an information processing program and information processing apparatus.Background

Conventionally, techniques related to feature extraction of an image by using a neural network have been provided. For example, a technique for identifying a subject included in an image by using a convolutional neural network has been provided.Citation List

### Patent Literature

Patent Literature 1: JP-A-2011-197892Summary

### Technical Problem

However, because the conventional technique described above is to only identify a subject included in an image based on a layout of the subject included in the image and on image features, it is not necessarily guaranteed to improve the accuracy of identifying a subject with motion in an image.Solution to Problem

An information processing program to cause a computer to execute
a generation process of generating a simulation video showing a movement of the subject based on posture dictionary information in which posture information indicating a posture of a skeleton model expressing a skeleton model of a subject and music information indicating musical notation in a musical score corresponding to an existing musical composition are associated with each other, by changing the posture over time according to the musical score.

An information processing program to cause a computer to execute:
an acquisition process of acquiring an analysis model that is trained based on ground truth data including a simulation video showing a movement of a subject and label information generated based on parameter information, the simulation video generated based on posture dictionary information in which posture information indicating a posture of a skeleton model expressing a skeleton of the subject and music information indicating musical notation in a musical score corresponding to an existing musical composition are associated with each other, by changing the posture over time according to the musical score, the parameter information used for simulation of the simulation video; and
a generation process of generating a musical score, which is chronological data of musical notation corresponding to a posture of the skeleton model expressing the skeleton of the subject from a captured video in which the subject is captured by using the analysis model acquired by the acquisition process.

### Brief Description of Drawings

FIG. 1 is a diagram explaining an overview of information processing according to an embodiment.
FIG. 2 is a diagram explaining an example of posture dictionary information according to the embodiment.
FIG. 3 is a diagram explaining an example of the posture dictionary information according to the embodiment.
FIG. 4 is a diagram illustrating an example of an information processing apparatus according to the embodiment.
FIG. 5 is a diagram explaining an example of a posture-dictionary-information storage unit according to the embodiment.
FIG. 6 is a diagram explaining an example of a file in a MIDI data format (MIDI like data) according to the embodiment.
FIG. 7 is a diagram explaining an example of a musical score corresponding to abnormal behavior of a fish.
FIG. 8 is a diagram illustrating an example of a musical score corresponding to swimming of a malformed fish.
FIG. 9 is a diagram illustrating variations of image elements according to the embodiment.
FIG. 10 is a diagram illustrating variations of image elements according to the embodiment.
FIG. 11 is a diagram illustrating variations of image elements according to the embodiment.
FIG. 12 is a diagram explaining machine learning of removing a noise caused by a reflection image.
FIG. 13 is a diagram explaining machine learning of removing a noise caused by a shadow.
FIG. 14 is a diagram illustrating an example of an individual model according to the embodiment.
FIG. 15 is a diagram illustrating a simulation video of an individual according to the embodiment.
FIG. 16 is a diagram illustrating fish raised in a tank according to the embodiment.
FIG. 17 is a diagram illustrating an example of tracking of an individual according to the embodiment.
FIG. 18 is a diagram illustrating an example of an identification method of an individual and a detection method of an abnormal behavior according to the embodiment.
FIG. 19 is a diagram illustrating an example of an alert sound output when an abnormal behavior is detected according to the embodiment.
FIG. 20 is a diagram illustrating an example of an alert sound output when an abnormal behavior is detected according to the embodiment.
FIG. 21 is a flowchart illustrating an example of an information processing method according to the embodiment.
FIG. 22 is a diagram explaining an example of posture dictionary information according to a modification.
FIG. 23 is a diagram explaining an example of the posture dictionary information according to the modification.
FIG. 24 is a diagram explaining an example of a key pose and a key frame according to the modification.
FIG. 25 is a diagram explaining about a relationship between an interpolation formula for compensating a posture between key poses and an auxiliary symbol relating to articulation in a musical score according to the modification.
FIG. 26 is a diagram explaining an example of posture dictionary information relating to a skeleton model having a large number of joint groups according to the modification.
FIG. 27 is a diagram illustrating an example of a hardware configuration of the information processing apparatus according to the embodiment.Description of Embodiments

Hereinafter, forms (hereinafter, "embodiments") to implement an information processing program and an information processing apparatus according to the present application will be explained in detail with reference to the drawings. The embodiments are not intended to limit the information processing program and the information processing apparatus according to the present application. Moreover, same reference symbols are assigned to same parts in the respective embodiments below, and duplicated explanation will be omitted.

### (Embodiment)

### [1. Introduction]

Various studies on the swimming motion (also referred to as swimming style) of fish have conventionally been conducted. For example, a study of classifying swimming methods of fish into 12 types, such as eel-like and tunalike, is known (reference: Lindsey, C.: Form, Function, and Locomotory Habits in Fish, Fish Physiology (Hoar, W. and Randall, D., eds.), Academic Press, New York, NY, United States, chapter 1, pp. 1 100 (1978)). Moreover, a lot of studies analyzing locomotion of specific fish, such as electric eel and zebrafish, using central pattern generator (CPG), have been conducted.

However, from the studies described above, it can be difficult to classify the swimming motion characteristics of individual fish. For example, from the studies described above, it can be difficult to classify swimming motion specific to a malformed individual seen in a fish farm. Furthermore, it can be difficult to classify an abnormal behavior of individual fish originated from a disease or an environmental factor.

Accordingly, a machine learning model is trained to estimate a swimming motion of a captured image in which an individual fish is captured, and a method of estimating a swimming motion of fish from a captured image in which an individual fish is captured by using the trained machine learning model can be considered. However, generating training data manually to replicate diverse swimming motions of fish requires a lot of time and effort.

To the contrary, the inventors of the present invention focused on the advantages of a musical score in expressing chronological data. Moreover, in the world, there exist a vast number of musical compositions and a vast number of musical scores corresponding thereto. The present invention proposes a method of automatically generating training data that replicates various types of swimming motions of fish by using musical scores corresponding to existing musical compositions. Specifically, an information processing apparatus 100 according to the present invention generates a simulation video that shows a movement of a subject (for example, a swimming motion of fish) by chronologically changing postures of a skeleton model according to a musical score based on posture dictionary information in which posture information that indicates a posture of the skeleton model expressing a skeleton of a subject (for example, individual fish) and music information that indicates musical notation (for example, note) in a musical score corresponding to an existing musical composition are associated with each other.

Thus, the information processing apparatus 100 can generate a large number of simulation videos that replicate a variety of swimming motions of fish automatically by using musical scores that correspond to existing musical compositions. Therefore, the information processing apparatus 100 can reduce the cost of generating simulation videos that replicate a variety of swimming motions of fish significantly. Furthermore, the information processing apparatus 100 can estimate a variety of swimming motions of fish included in an image accurately by using the simulation video that replicates a variety of swimming motions of fish as training data of a machine learning model. Moreover, because the information processing apparatus 100 can estimate a variety of swimming motions of fish accurately, the information processing apparatus 100 can accurately identify individual fish based on characteristics of swimming motions of individual fish.

Furthermore, the present invention proposes a method of generating a musical score corresponding to a swimming motion of fish from a captured video in which the swimming motion is recorded by using a machine learning model that has been trained based on training data replicating a variety of swimming motions of fish using musical scores corresponding to existing musical compositions. Specifically, the information processing apparatus 100 according to the present invention generates a musical score, which is chronological data of musical notation corresponding to a posture of a skeleton model that expresses a skeleton of a subject from a captured video of the subject (for example, individual fish) by using a machine learning model that has been trained based on ground truth data that includes the simulation video indicating a movement of a subject (for example, swimming motion of fish) and label information generated based on parameter information that has been used for simulation of the simulation video.

Thus, the information processing apparatus 100 can detect characteristics of, for example, a swimming motion specific to malformed fish or an abnormal behavior (unusual swimming behavior) of individual fish, and output sound based on a musical score that corresponds to the swimming motion specific to malformed fish or the abnormal behavior of individual fish. Thus, the information processing apparatus 100 can notify of an abnormality of individual fish by alert sound to a fish manager of a fish farmer or the like without observing abnormalities of individual fish visually. Moreover, the information processing apparatus 100 can output different alert sounds according to differences in type of abnormal behaviors (for example, abnormal behavior of fish remaining still and not moving, abnormal behavior of hyperactive swimming of fish, and the like). Therefore, the information processing apparatus 100 can support management of fish by a fish manager of a fish farmer and the like.

### [2. Overview of Information Processing]

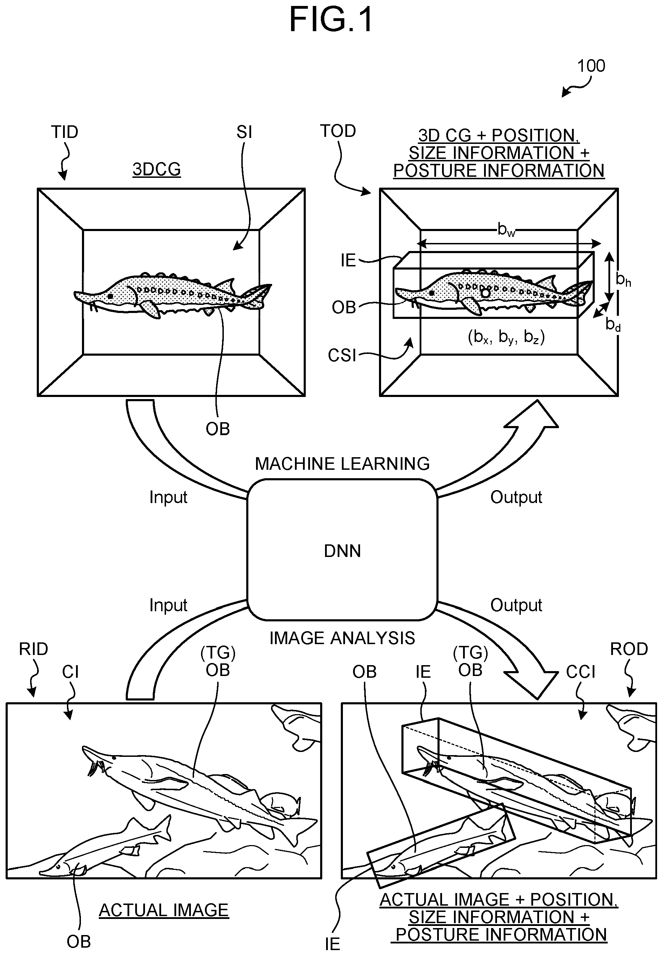

Hereinafter, an overview of information processing according to the embodiment will be explained by using FIG. 1. FIG. 1 is an explanatory diagram illustrating the overview of the information processing according to the embodiment. An upper row of FIG. 1 is a diagram schematically illustrating processing of training a machine learning model (hereinafter, also referred to as analysis model) that is used for image analysis by deep learning. In FIG. 1, the analysis model is a deep neural network (DNN). Moreover, a lower row of FIG. 1 is a diagram schematically illustrating processing of estimating a position and a posture of individual farmed fish included in an image from an actual image of farmed fish by using the analysis model trained as in the upper row of FIG. 1. The analysis model is used, for example, for tracking of farmed fish and for detecting abnormal behaviors.

### [2-1. Generation of Training Data]

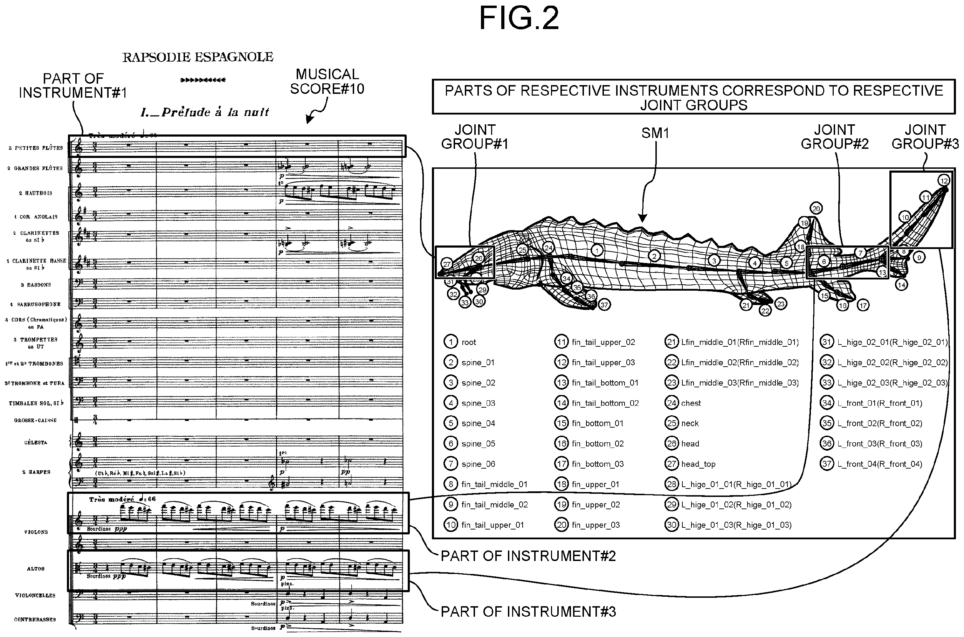

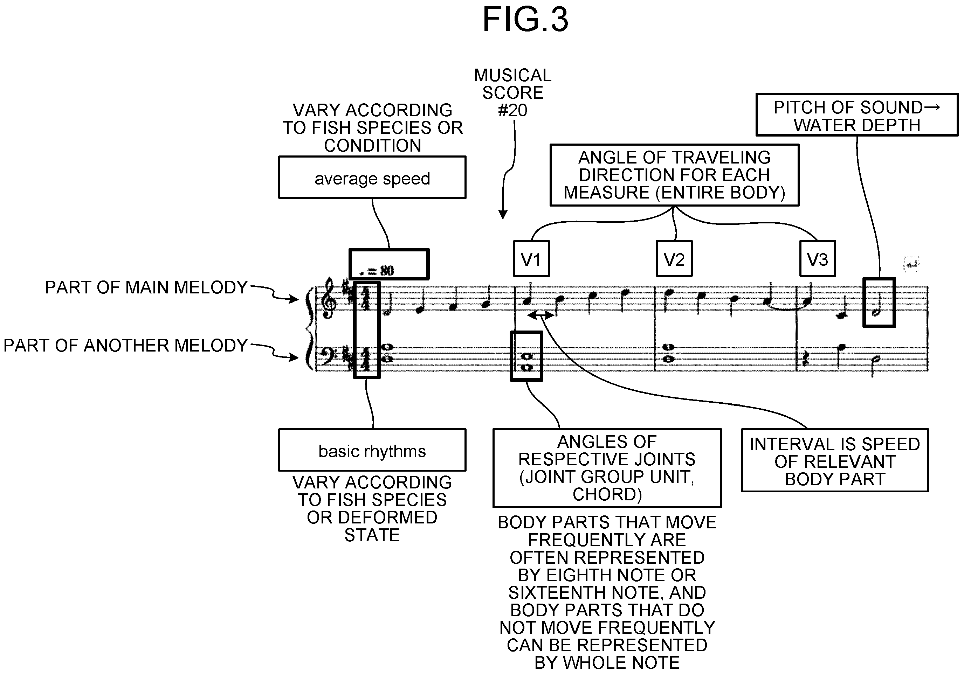

First, in the upper row of FIG. 1, by using computer graphics (CG), the information processing apparatus 100 generates a three-dimensional CG image of an individual OB. Specifically, the information processing apparatus 100 generates a simulation video showing a swimming motion of the individual OB, based on posture dictionary information in which posture information indicating a posture of a skeleton model SM1 (refer to FIG. 2) expressing a skeleton of the individual OB and music information indicating musical notation (for example, notes) in a musical score corresponding to an existing musical composition are associated with each other, by changing postures of the skeleton model SM1 over time according to the musical score. In FIG. 1, explanation will be given on the premise that the posture dictionary information generated by the information processing apparatus 100 is already available. The posture dictionary information will be explained in detail by using FIG. 2 and FIG. 3 described later.

The information processing apparatus 100 generates training data of deep learning by using the generated three-dimensional CG image. The information processing apparatus 100 generates the training data including a large number of data sets. For example, respective data sets include input data ITD and ground truth data TOD. The information processing apparatus 100 generates a simulation image SI to be the input data TID by computer graphics. Moreover, the information processing apparatus 100 generates the ground truth data TOD by adding label information to the input data TID. The label information is information that indicates a correct answer (so-called correct label) in supervised learning. The information processing apparatus 100 automatically generates the label information based on parameter information that has been used for simulation.

A subject of simulation is determined based on a purpose of learning. For example, when farmed fish is tracked individually, simulation of the individual OB is performed. The example in FIG. 1 is an example of generating the simulation image SI of the individual OB, which is a farmed fish, for the purpose of tracking the farmed fish. The information processing apparatus 100 generates label information that includes classification information for classifying the individual OB, position information of the individual OB, and posture information of the individual OB. In FIG. 1, illustration of the posture information of the individual OB is omitted.

The classification information includes, for example, information of type (fish species and the like), morphological features (fin deformity, missing part, body color, pattern, etc.), and the like of the individual OB. The position information includes, for example, information indicating a central position of the individual OB and a range of presence of the individual OB. The position information is generated, for example, by using three-dimensional coordinate information. In the example in FIG. 1, information relating to coordinates (bₓ, b_{y}, b_{z}) of the center of the individual OB, and a depth b_{d}, a width b_{w}, and a height bₕ of a minimum size boundary cube that encloses the individual OB is indicated as the position information. The information processing apparatus 100 extracts information of size of the individual based on the position information (information indicating the range of presence) of the individual OB.

The posture information includes, for example, information that indicates a posture of the skeleton model SM1 expressing the skeleton of the individual OB. On a right side of FIG. 2, the skeleton model SM1 expressing the skeleton of the individual OB is illustrated. The individual OB in FIG. 2 is sturgeon. The posture information includes, for example, information that indicates a posture of the entire body of the individual OB. The posture information includes, for example, information of a vector indicating a traveling direction of the individual OB when the entire body of the individual OB is considered as one vector.

Furthermore, the posture information includes, for example, information that indicates a posture of a joint group, which is a group of plural different joints constituting the skeleton model SM1 expressing the skeleton of the individual OB. The joints move in collaboration with adjacent joints, with the adjacent joints as one group (joint group). For example, the posture information includes information that indicates a position and an angle of each of the different joints constituting a joint group. Moreover, the posture information includes, for example, information that indicates a posture of each joint constituting the skeleton model SM1 expressing the skeleton of the individual OB. For example, the posture information includes information that indicates a position and an angle of each joint constituting the skeleton model SM1. In the example in FIG. 2, the posture information includes information that indicates a posture (position and angle) of each of 37 joints that constitute the skeleton model SM1 expressing the skeleton of the individual OB.

Furthermore, the ground truth data TOD can include an image element IE to identify the individual OB. The image element IE is, for example, a frame element indicating the boundary cube. The information processing apparatus 100 automatically generates the image element IE based on the position information of the individual OB that has been used for simulation. In the example in FIG. 1, the image element IE is expressed by a boundary cube, but the image element IE is not limited thereto. The image element IE can include, for example, a frame element surrounding the individual OB, or a color element to identify the individual OB by color.

As described above, the information processing apparatus 100 generates training data of deep learning. Upon generation of the training data, the information processing apparatus 100 performs machine learning (supervised learning) with the input data TID and the ground truth data TOD as training data in a deep neural network. Specifically, the information processing apparatus 100 generates trained DNN (analysis model) by training the DNN (analysis model) such that the ground truth data TOD is output from the DNN (analysis model) when the input data TID is input to the DNN (analysis model).

### [2-2. Image Analysis Using Analysis Model]

Next, as illustrated in a lower row of FIG. 1, when input data RID is input to the trained DNN, the information processing apparatus 100 generates output data ROD in which the label information and the image element IE are added to the input data RID.

For example, when a captured image CI is input to the DNN (analysis model), the information processing apparatus 100 extracts each of the individual OB from the captured image CI by using the DNN (analysis model). Subsequently, having extracted each of the individual OB, the information processing apparatus 100 generates the classification information, the position information, and the posture information of each of the individual OB based on characteristics of each of the individual OB. Moreover, the information processing apparatus 100 generates label information that includes the classification information, the position information, and the posture information for each of the individual OB. Furthermore, the information processing apparatus 100 generates the image element IE for each of the individual OB based on the position information of the each of the individual OB. Having generated the image element IE, the information processing apparatus 100 generates a correction image CCI in which the image element IE of each of the individual OB is added to the captured image CI. The information processing apparatus 100 generates the output data ROD by adding the label information of each of the individual OB to the correction image CCI.

The information processing apparatus 100 performs analysis of a target TG by a method for image analysis based on the captured image CI of the target TG. The method for image analysis by the information processing apparatus 100 is applicable to a wide range of fields, such as fisheries, agriculture, forestry, and industry. An analysis target is appropriately determined based on a technical field and a purpose of the analysis. For example, in the field of fisheries, the analysis targets include the number of farmed fish, a growth status, a feeding behavior, an abnormal behavior, and the like. In the field of agriculture, the analysis targets include a growth status of crops, a yield quantity, and the like. In the field of forestry, the analysis targets include a growth status of trees, a volume of timber, and the like. In the field of industry, the analysis targets include a quantity of products, presence or absence of defective items, and the like.

### [3. Posture Dictionary Information]

Next, the posture dictionary information according to the embodiment will be explained by using FIG. 2 to FIG. 3. FIG. 2 to FIG. 3 are diagrams for explaining an example of the posture dictionary information according to the embodiment. The posture dictionary information herein denotes information in which the posture information indicating a posture of the skeleton model SM1 expressing the skeleton of the individual OB and the music information indicating musical notation in a musical score corresponding to an existing musical composition are associated with each other. For example, the posture dictionary information is generated by associating the posture information indicating a posture of the skeleton model SM1 expressing the skeleton of the individual OB and the music information indicating musical notation in a musical score corresponding to an existing musical composition through human intervention.

First, it will be explained by using FIG. 2. A left side of FIG. 2 illustrates a musical score #10 of orchestra. Moreover, a right side of FIG. 2 illustrates the skeleton model SM1 expressing the skeleton of the individual OB. In the example illustrated in FIG. 2, parts for respective instruments in the musical score #10 of orchestra and the respective joint groups constituting the skeleton model SM1 of the individual OB are associated with each other. In FIG. 2, the information processing apparatus 100 acquires the posture dictionary information in which respective notes in a part of each instrument in the musical score #10 of orchestra and respective postures of each joint group constituting the skeleton model SM1 are associated with each other.

For example, the information processing apparatus 100 acquires the posture dictionary information in which respective notes of a part of an instrument #1 constituting the musical score #10 of orchestra and respective postures of a joint group #1 constituting the skeleton model SM1 are associated with each other. Moreover, the information processing apparatus 100 generates a simulation video that shows a movement of a body part corresponding to the joint group #1 constituting the body of the individual OB by changing postures of the joint group #1 over time according to a melody of the part of the instrument #1, based on the posture dictionary information in which the respective notes of the part of the instrument #1 and the respective postures of the joint group #1 are associated with each other.

Moreover, for example, the information processing apparatus 100 acquires the posture dictionary information in which respective notes of a part of an instrument #2 constituting the musical score #10 of orchestra and respective postures of a joint group #2 constituting the skeleton model SM1 are associated with each other. Furthermore, the information processing apparatus 100 generates a simulation video that shows a movement of a body part corresponding to the joint group #2 constituting the body of the individual OB by changing postures of the joint group #2 over time according to a melody of the part of the instrument #2, based on the posture dictionary information in which the respective notes of the part of the instrument #2 and the respective postures of the joint group #2 are associated with each other.

Moreover, for example, the information processing apparatus 100 acquires the posture dictionary information in which respective notes of a part of an instrument #3 constituting the musical score #10 of orchestra and respective postures of a joint group #3 constituting the skeleton model SM1 are associated with each other. Furthermore, the information processing apparatus 100 generates a simulation video that shows a movement of a body part corresponding to the joint group #3 constituting the body of the individual OB by changing postures of the joint group #3 over time according to a melody of the part of the instrument #3 based on the posture dictionary information in which the respective notes of the part of the instrument #3 and the respective postures of the joint group #3 are associated with each other.

Similarly, the information processing apparatus 100 acquires the posture dictionary information in which respective notes of a part of respective instruments in the musical score #10 of orchestra and respective postures of respective joint groups constituting the skeleton model SM1 are associated with each other for all of the joint groups constituting the skeleton model SM1. Furthermore, the information processing apparatus 100 generates a simulation video that shows movements of respective body parts corresponding to the joint groups constituting the body of the individual OB by changing postures of the respective joint groups over time according to melodies of the parts of the respective instruments, based on the posture dictionary information in which the respective notes of the parts of the respective instruments and the respective postures of the respective joint groups are associated with each other.

As described, the information processing apparatus 100 can generate a simulation video that shows a swimming motion of the individual OB by changing postures of the respective joint groups constituting the body of the individual OB over time according to the melodies of the parts of the respective instruments based on the posture dictionary information in which the respective notes in the parts of the respective instruments and the respective postures of the respective joint groups are associated with each other.

Furthermore, the information processing apparatus 100 can generate simulation videos showing a variety of swimming motion of the individual OB by changing postures of the respective joint groups constituting the body of the individual OB over time according to respective melodies of a large number of musical scores.

Next, it will be explained by using FIG. 3. In an example illustrated in FIG. 3, a part of a main melody in a musical score #20 of orchestra and the entire body of the individual OB are associated with each other. Specifically, notes in the part of the main melody indicate a posture of the entire body of the individual OB associated with the notes. The information processing apparatus 100 acquires posture dictionary information in which the notes in the part of the main melody and the posture of the entire body of the skeleton model SM1 are associated with each other.

Moreover, a duration of a sound of a note in the part of the main melody indicates a duration of maintaining a posture of the entire body of the skeleton model SM1 that is associated with the note. The information processing apparatus 100 acquires posture dictionary information in which a duration of a sound of a note in the part of the main melody and a duration of maintaining a posture of the entire body of the skeleton model SM1 are associated with each other.

Furthermore, a pitch of a sound of a note in the part of the main melody indicates a water depth of the center position of the entire body of the skeleton model SM1 (distance to the center position of the entire body of the skeleton model SM1 under water from the water surface) that is associated with the note. The information processing apparatus 100 acquires posture dictionary information in which a pitch of a sound of a note in the part of the main melody and a water depth of the center position of the entire body of the skeleton model SM1 (distance to the center position of the entire body of the skeleton model SM1 under water from the water surface) are associated with each other.

Moreover, a tempo marking of a musical score illustrated in FIG. 3 indicates an average speed of the entire body of the skeleton model SM1 (that is, individual OB). The information processing apparatus 100 acquires posture dictionary information in which a tempo marking of a musical score and an average speed of the entire body of the skeleton model SM1 are associated with each other. Furthermore, the average speed of the individual OB varies according to fish species or conditions of the individual OB. For example, with fish that swim slowly like sturgeon, a musical score that corresponds to a musical composition to which a slow temp markings, such as Adagio, is given may be associated. Moreover, with fish that swim fast like salmon and tuna, a musical score that corresponds to a musical composition to which a fast tempo marking, such as Allegro and Allegretto, is given may be associated. As described, a tempo marking of a musical score that is associated as an average speed of the entire body of the skeleton model SM1 may be determined according to fish species or a condition of the individual OB.

Moreover, a time signature of a musical score illustrated in FIG. 3 indicates a basic swimming rhythm of the entire body of the skeleton model SM1 (that is, individual OB). The information processing apparatus 100 acquires posture dictionary information in which a time signature of a musical score and a basic swimming rhythm of the entire body of the skeleton model SM1 are associated with each other. Furthermore, the basic swimming rhythm of the individual OB varies according to fish species and a state of abnormal shape of the individual OB. For example, a basic swimming rhythm of a healthy fish and a basic swimming rhythm of a deformed fish (wound fish or the like) are different. For example, with a basic swimming rhythm of the same fish species, a 4/4 time signature (rhythm of four quarter notes per measure) is associated. In this situation, for example, with a basic swimming rhythm of a deformed fish of the same species, a 3/4 time signature (rhythm of three quarter notes per measure) may be associated. As described, a time signature of a musical score associated as a basic swimming rhythm of the entire body of the skeleton model SM1 may be determined according to fish species and a state of abnormal shape of the individual OB.

Furthermore, codes V1, V2, and V3 assigned per measure of the part of the main melody illustrated in FIG. 3 indicate angles of traveling directions of the entire body of the skeleton model SM1 (that is, individual OB). Specifically, V1, V2, and V3 respectively represent vectors indicating a traveling direction of the entire body of the skeleton model SM1 when the entire body of the skeleton model SM1 is regarded as one vector. The information processing apparatus 100 acquires posture dictionary information in which respective measures of the part of the main melody and respective vectors indicating an angle of a traveling direction of the entire body of the skeleton model SM1 are associated with each other.

As described above, in the example illustrated in FIG. 3, the information processing apparatus 100 acquires posture dictionary information in which the respective notes of the part of the main melody constituting the musical score #20 of orchestra and the respective postures of the entire body of the individual OB are associated with each other. Moreover, the information processing apparatus 100 generates a simulation video that shows a movement of posture of the entire body of the individual OB by changing postures of the entire body of the individual OB over time according to the main melody based on the posture dictionary information in which the respective notes of the part of the main melody and the respective postures of the entire body of the individual OB are associated with each other.

Moreover, in the example illustrated in FIG. 3, a part of a melody other than the main melody in the musical score #20 of orchestra and a predetermined joint group constituting a skeleton model of the individual OB are associated with each other. Specifically, a chord symbol representing a chord in the part of the other part indicates a posture that is associated with the chord symbol representing the chord. The information processing apparatus 100 acquires posture dictionary information in which a chord symbol representing a chord in the part of the other melody and a posture (angle) of a joint group constituting the skeleton model SM1 are associated with each other.

Furthermore, respective notes constituting a chord in the part of the other melody indicates postures (angles) of respective joints constituting a joint group that is associated with the chord. The information processing apparatus 100 acquires posture dictionary information in which respective notes constituting a chord in the part of the other melody and postures (angles) of respective joints constituting a joint group that constitutes the skeleton model SM1 are associated with each other. That is, the information processing apparatus 100 acquires the posture dictionary information in which the notes in the part of the other melody and the postures (angles) of the joints constituting the skeleton model SM1 are associated with each other.

Moreover, a duration of a sound of a note in the part of the other melody indicates a duration of maintaining a posture (angle) of a joint that is associated with the note. The information processing apparatus 100 acquires posture dictionary information in which a duration of a sound of a note in the part of the other melody and a duration of maintaining a posture (angle) of a joint constituting the skeleton model SM1 are associated with each other. Furthermore, for example, a joint part that moves frequently can be represented by a short duration note, such as eighth note and sixteenth note. Moreover, a joint part that does not move frequently can be represented by a chord constituted of long notes of a long duration of sound, such as whole note. As described, types of notes associated as a duration of maintaining a posture (angle) of a joint may be determined according to frequency of movement of a joint part.

Furthermore, a pitch of a sound of a note in the part of the other melody indicates a water depth of a joint (distance to the joint positioned under water from the water surface) that is associated with the note. The information processing apparatus 100 acquires posture dictionary information in which a pitch of a sound of a note in the part of the other melody and a water depth of a joint (distance to the joint positioned under water from the water surface) constituting the skeleton model SM1 are associated with each other.

As described above, in the example illustrated in FIG. 3, the information processing apparatus 100 acquires posture dictionary information in which respective notes of the part of a part other than a melody constituting the musical score #20 of orchestra and respective postures of a predetermined joint group of the individual OB are associated with each other. Moreover, the information processing apparatus 100 generates a simulation video that shows a movement of a part corresponding to a predetermined joint group of the individual OB by changing postures of the predetermined joint group of the individual OB over time according to the other melody based on the posture dictionary information in which the respective notes of the part of the other melody and the respective postures of the predetermined joint group of the individual OB are associated with each other.

### [4. Configuration of Information Processing Apparatus]

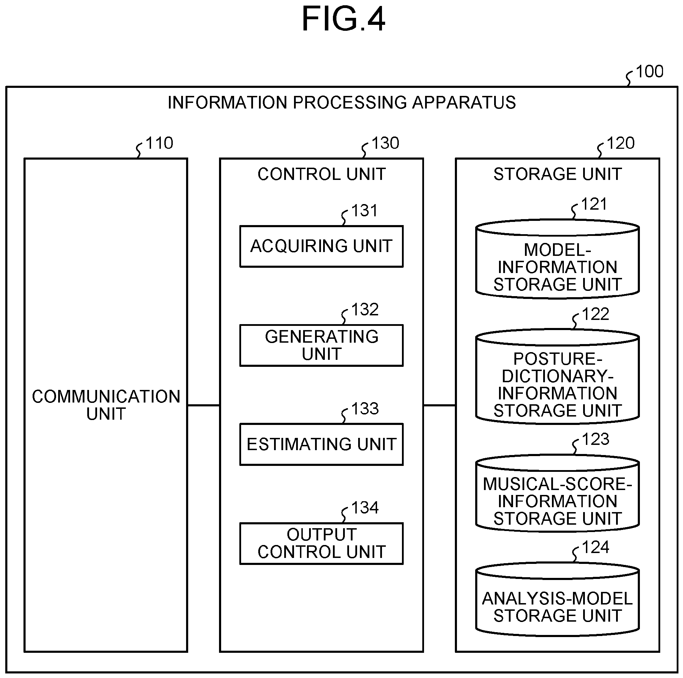

Next, a configuration of the information processing apparatus 100 according to the embodiment will be explained by using FIG. 4. FIG. 4 is a diagram illustrating a configuration example of the information processing apparatus 100 according to the embodiment. The information processing apparatus 100 may include a communication unit 110, a storage unit 120, and a control unit 130. The information processing apparatus 100 may include an input unit (for example, a keyboard, a mouse, and the like) that accepts various kinds of operations from an administrator or the like of the information processing apparatus 100, and a display unit (for example, a liquid crystal display, and the like) to display various kinds of information.

### (Communication Unit 110)

The communication unit 110 is implemented by, for example, a network interface card (NIC), or the like. The communication unit 110 is connected to a network wirelessly or wiredly, and performs communication of information with, for example, a terminal device that is used by a manager that manages an individual.

### (Storage Unit 120)

The storage unit 120 is implemented by, for example, a semiconductor memory device, such as a random access memory (RAM) and a flash memory, or a storage device, such as a hard disk and an optical disk.

### (Model-Information Storage Unit 121)

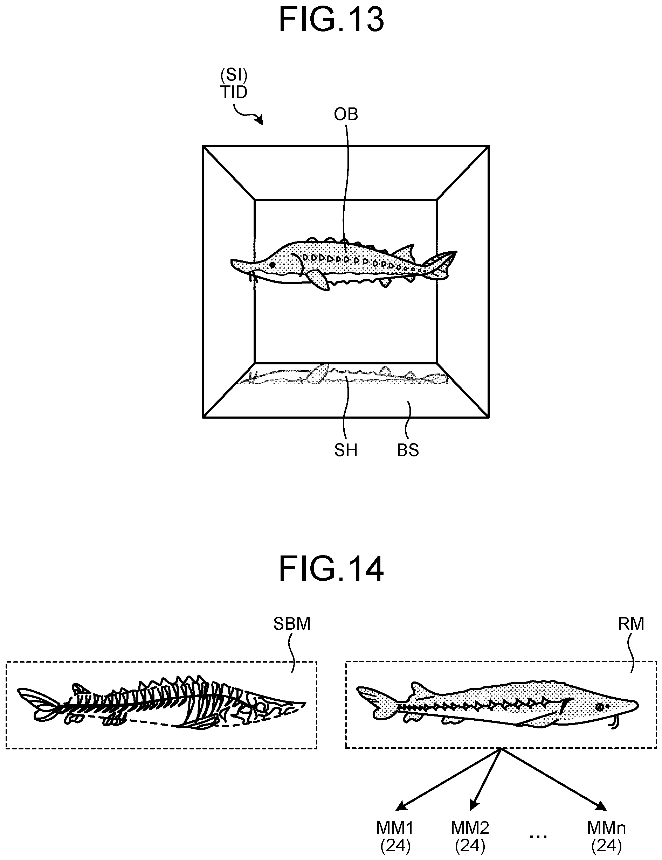

The model-information storage unit 121 stores information relating to a simulation model (individual model 24) that represents a behavior of the individual OB. The individual model 24 is a simulation model based on morphological features of the individual OB. The individual model 24 will be explained in detail by using FIG. 14 described later.

### (Posture-Dictionary-Information Storage Unit 122)

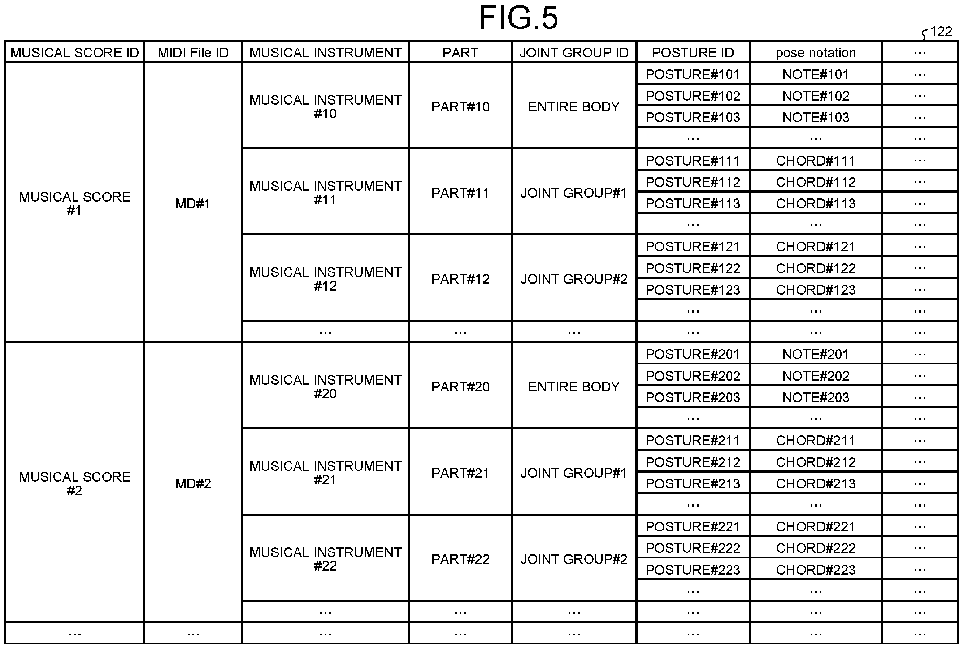

The posture-dictionary-information storage unit 122 stores posture dictionary information in which the posture information indicating a posture of a skeleton model expressing the skeleton of the individual OB and the music information indicating musical notation in a musical score that corresponds to an existing musical composition are associated with each other. FIG. 5 illustrates an example of the posture-dictionary-information storage unit 122 according to the embodiment. In the example illustrated in FIG. 5, the posture-dictionary-information storage unit 122 has items such as "MUSICAL SCORE ID", "MIDI FILE ID", "INSTRUMENT", "PART", "JOINT GROUP ID", "POSTURE ID", and "POSE NOTATION".

"MUSICAL SCORE ID" indicates identification information to identify a musical score. "MIDI FILE ID" indicates identification information to identify a file in a musical instrument digital interface (MIDI) data format corresponding to a musical score (MIDI Like data). "INSTRUMENT" indicates identification information to identify an instrument with which a musical composition corresponding to a musical score is played. "PART" indicates identification information to identify a part of an instrument with which a musical composition corresponding to a musical score is played. "JOINT GROUP ID" indicates identification information to identify a joint group constituting a skeleton model that expresses the skeleton of the individual OB. "POSTURE ID" indicates identification information to identify a posture of a joint group or an entire body. "POSE NOTATION" indicates identification information to identify a chord symbol representing a chord or a note.

### (Musical-Score-Information Storage Unit 123)

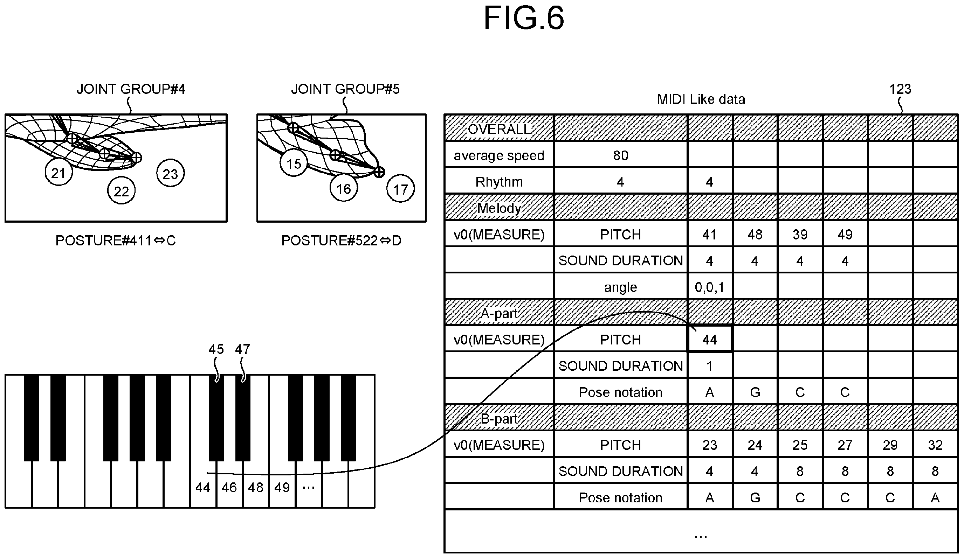

The musical-score-information storage unit 123 stores identification information (for example, "musical score ID") to identify a musical score and a file in a MIDI data format (MIDI Like data) corresponding to the musical score in an associated manner. The file in the MIDI data format corresponding to the musical composition is generated by adding information, such as a vector indicating a traveling direction of the entire body of the skeleton model SM1 (that is, individual OB) to each measure of a part of a main melody of MIDI data that corresponds to an existing musical score through human intervention. FIG. 6 illustrates an example of a file in the MIDI data format (MIDI Like data) according to the embodiment. In the example illustrated in FIG. 6, the file in the MIDI data format (MIDI Like data) has items, such as "OVERALL", "MELODY", "A-PART", and "B-PART".

"Overall" indicates common information throughout an entire musical score. "OVERALL" has sub-entries, such as "AVERAGE SPEED" and "RHYTHM". "AVERAGE SPEED" indicates a tempo of a musical score that is represented by a tempo marking. "RHYTHM" indicates a rhythm of a musical score that is represented by a time signature of the musical score.

"MELODY" indicates information relating to a part of a main melody in a musical score. "MELODY" has a subentry, such as "v0 (measure)". "v0 (measure)"indicates a single measure of the part of the main melody. "v0 (measure)" has sub-entries, such as "PITCH", "NOTE DURATION", and "ANGLE". "PITCH" indicates a pitch of a sound of each note included in one measure of the part of the main melody. "NOTE DURATION" indicates a duration of a sound of each note included in one measure of the part of the main melody. "ANGLE" indicates a vector indicating a traveling direction of the entire body of the skeleton model SM1 (that is, individual OB) added to one measure of the part of the main melody.

"A-PART" and "B-PART" respectively indicate information relating to parts of melodies other than the main melody in the musical score. "A-PART" and "B-PART" have sub-entries, such as "v0 (measure)". "v0 (measure)" respectively indicates one measure of the part of the other melodies. "v0 (measure)" has sub-entries, such as "PITCH", "SOUND DURATION", and "POSE NOTATION". "PITCH" indicates a pitch of sound of each note included in one measure of the part of the other melody. For example, a pitch represented by "44" of "A-PART" in FIG. 6 corresponds to a pitch of sound of a key with number "44" of the piano illustrated in a lower left part of FIG. 6. "SOUND DURATION" indicates a duration of a sound of each note included in one measure of the part of the other melody. "POSE NOTATION" indicates a chord symbol corresponding to each chord that is included in one measure of the part of the other melody. For example, a posture #411 of a joint group #4 illustrated in an upper left part of FIG. 6 is associated with a chord represented by a symbol "C" included in the part of the other melody. For example, respective postures (angles) of a joint represented by 21, a joint represented by 22, and a joint represented by 23 constituting the joint group #4 and pitches of three notes included in the chord represented by the symbol "C" are associated, respectively. Moreover, a posture #522 of a joint group #5 and a chord represented by a symbol "D" included in the part of the other melody are associated with each other. For example, postures (angles) of a joint represented by 15, a joint represented by 16, and a joint represented by 17 constituting the joint group #5 and pitches of three notes included the chord represented by the symbol "D" are associated with each other, respectively.

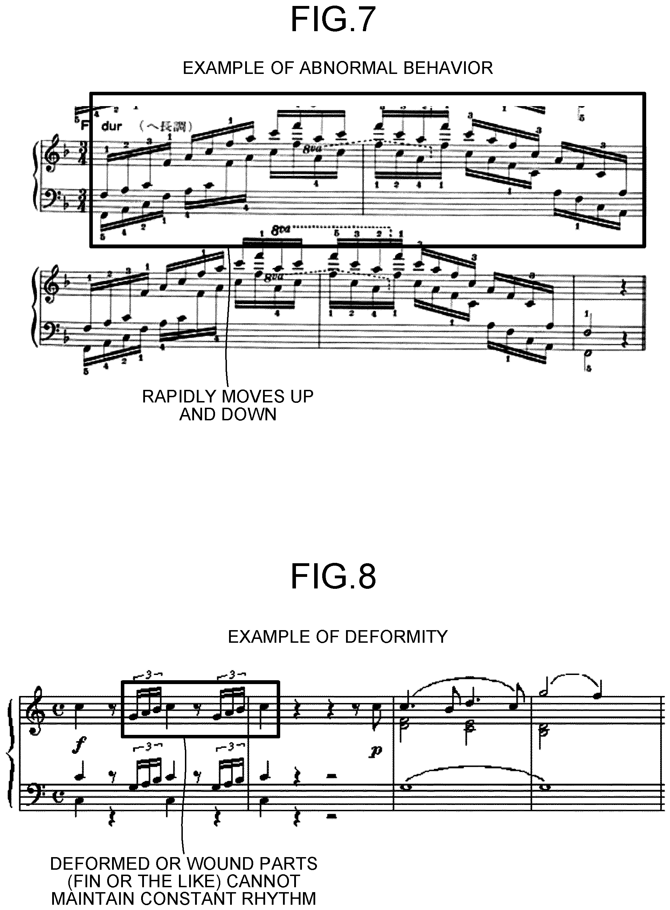

An example of a musical score corresponding to an abnormal behavior of fish will be explained by using FIG. 7. FIG. 7 is a diagram explaining an example of a musical score corresponding to an abnormal behavior of fish. The musical score illustrated in FIG. 7 is associated with a movement of the individual OB of fish associated with the musical score rapidly moving up and down in a tank.

Next, an example of a musical score corresponding to swimming of a deformed fish will be explained by using FIG. 8. FIG. 8 is a diagram illustrating an example of a musical score corresponding to swimming of a deformed fish. A part on an upper row of a musical score illustrated in FIG. 8 is associated with motion in which a constant rhythm cannot be maintained because the joint group of the individual OB of fish associated with the part on the upper row is a deformed or wound part (fin or the like).

### (Analysis-Model Storage Unit 124)

An analysis-model storage unit 124 stores various kinds of information relating to an analysis model that has been generated by the information processing apparatus 100. The analysis-model storage unit 124 stores, for example, model data of a trained analysis model. In the following, the analysis model may be referred to as the analysis model 124.

### (Control Unit 130)

The control unit 130 is a controller, and is implemented, for example, as various kinds of programs (corresponding to an example of information processing program) stored in a storage device in the information processing apparatus 100 are executed by a central processing unit (CPU), a micro processing unit (MPU), or the like, using a RAM as a work area. Moreover, the control unit 130 is a controller, and is implemented by an integrated circuit, such as an application specific integrated circuit (ASIC) and a field programmable gate array (FPGA).

The control unit 130 includes an acquiring unit 131, a generating unit 132, an estimating unit 133, and an output control unit 134 as functional units, and may implement or perform actions of information processing explained below. An internal configuration of the control unit 130 is not limited to the configuration illustrated in FIG. 4, but may have another configuration as long as it is a configuration to perform the information processing described later. Moreover, the respective functional units are to illustrate functions of the control unit 130, and are not necessarily required to be physically distinguished.

### (Acquiring Unit 131)

The acquiring unit 131 acquires information relating to the individual model 24. Having acquired the information relating to the individual model 24, the acquiring unit 131 stores the information relating to the individual model 24 in the model-information storage unit 121.

Moreover, the acquiring unit 131 acquires the posture dictionary information in which the posture information indicating a posture of the skeleton model SM1 expressing the skeleton of the individual OB and the music information indicating musical notation in a musical score corresponding to an existing musical composition are associated with each other. For example, the acquiring unit 131 acquires the posture dictionary information generated by a creator of the posture dictionary information from a terminal device of the creator of the posture dictionary information. Having acquired the posture dictionary information, the acquiring unit 131 stores the posture dictionary information in the posture-dictionary-information storage unit 122.

In the example illustrated in FIG. 2, the acquiring unit 131 acquires posture dictionary information in which respective notes in parts of respective instruments in the musical score #10 of orchestra and respective postures of respective joint groups constituting the skeleton model SM1 are associated with each other. The acquiring unit 131 acquires posture dictionary information in which respective notes in parts of respective instruments in the musical score #10 of orchestra and respective postures of respective joint groups constituting the skeleton model SM1 are associated with each other, for all of the joint groups constituting the skeleton model SM1.

In the example illustrated in FIG. 3, the acquiring unit 131 acquires the posture dictionary information in which the respective notes of the part of a main melody constituting the musical score #20 of orchestra and the respective postures of the entire body of the skeleton model SM1 of the individual OB are associated with each other. Specifically, the acquiring unit 131 acquires the posture dictionary information in which a duration of a sound of a note in the part of the main melody and a duration of maintaining a posture of the entire body of the skeleton model SM1 are associated with each other. Furthermore, the acquiring unit 131 acquires the posture dictionary information in which a pitch of a sound of a note in the part of the main melody and a water depth of the center position of the entire body of the skeleton model SM1 (distance to the center position of the entire body of the skeleton model SM1 under water from the surface) are associated with each other. Moreover, the acquiring unit 131 acquires the posture dictionary information in which a tempo marking of the musical score and an average speed of the entire body of the skeleton model SM1 are associated with each other. Furthermore, the acquiring unit 131 acquires the posture dictionary information in which the time signature of the musical score and the basic swimming rhythm of the entire body of the skeleton model SM1 are associated with each other. Moreover, the acquiring unit 131 acquires the posture dictionary information in which the vector assigned to each measure of the part of the main melody and an angle of a traveling direction of the entire body of the skeleton model SM1 are associated with each other.

With the vectors added to the respective measures of the part of the main melody described above, instruction information relating to various variations relating to the traveling direction of the entire body may be associated other than the angle of the traveling direction of the entire body of the skeleton model SM1. For example, with a vector, instruction information to instruct the individuals OB to move such that collision with each other can be avoided so that the plural individuals OB do not collide against each other may be associated when a distance between the individuals OB reaches a certain proximity to each other. Moreover, with the vector, instruction information to instruct such that initial positions of the respective plural individuals OB are set randomly may be associated. For example, suppose that the angle of the traveling direction of the entire body of the respective individuals OB are set to 45 degrees diagonally upward to the left. In this situation, suppose that the one individual OB swims diagonally toward the upper left side from the initial position set randomly, and suppose that it nearly collides with another individual OB at a certain location. One individual OB then changes the traveling direction, for example, to the right by 30 degrees to avoid collision with the other individual OB. From the state in which the traveling direction has been changed to the right by 30 degrees, the one individual OB then swims to maintain the angle of the traveling direction of the entire body to be 45 degrees diagonally upward to the left. By thus associating the instruction to instruct such that the initial position is randomly set and the instruction information to instruct the individuals OB not to collide with each other with the vector, even if the angle of the traveling direction of the entire body set to the plural individuals OB is the same, it is possible to give variations in the way of swimming to the respective plural individuals OB. Moreover, the vector is not limited to be given per measure of the part of the main melody, but may be given per melody (for example, for each large slur, or the like) to a musical score.

Furthermore, in the example illustrated in FIG. 3, the acquiring unit 131 acquires the posture dictionary information in which the respective notes of the part of a melody other than the main melody constituting the musical score #20 of orchestra and respective postures of a predetermined joint group of the individual OB are associated with each other. Specifically, the acquiring unit 131 acquires the posture dictionary information in which the chord symbols representing chords in the part of the other melody and the postures (angles) of the joint group constituting the skeleton model SM1 are associated with each other. For example, the acquiring unit 131 acquires the posture dictionary information in which respective notes constituting a chord in the part of the other melody and postures (angles) of respective joints that constitute a joint group constituting the skeleton model SM1 are associated with each other. That is, the acquiring unit 131 acquires the posture dictionary information in which notes in the part of the other melody and the postures (angles) of the joints constituting the skeleton model SM1 are associated with each other. Moreover, the acquiring unit 131 acquires the posture dictionary information in which a duration of a sound of a note in the part of the other melody and a duration of maintaining a posture (angle) of a joint that constitutes the skeleton model SM1 are associated with each other. Furthermore, the acquiring unit 131 acquires the posture dictionary information in which a pitch of a sound of a note in the part of the other melody and a water depth of a joint constituting the skeleton model SM1 (distance to the joint positioned under water from the water surface) are associated with each other.

Moreover, the acquiring unit 131 may acquire posture dictionary information in which posture information indicating a range of motion of a posture of a joint group and music information indicating a range of pitch of sounds of notes in the part of the other melody are associated with each other. For example, the acquiring unit 131 acquires posture dictionary information in which an upper limit value of an angle of motion of a posture of a joint group and a pitch of a sound of a note that represents the highest pitch among the notes in the part of the other melody are associated with each other. Furthermore, the acquiring unit 131 acquires posture dictionary information in which a lower limit value of an angle of motion of a posture of a joint group and a pitch of a sound of a note that represents the lowest pitch among the notes in the part of the other melody are associated with each other.

Moreover, the acquiring unit 131 acquires the musical score information, which is a file in the MIDI data format (MIDI Like data) corresponding to an existing musical composition. For example, the acquiring unit 131 acquires the musical score information generated by a creator of the musical score information from a terminal device of the creator of the musical score information. Having acquired the musical score information, the acquiring unit 131 stores the musical score information in the musical-score-information storage unit 123.

### (Generating Unit 132)

The generating unit 132 generates a three-dimensional CG image of the individual OB by using computer graphics (CG). Specifically, the generating unit 132 acquires the posture dictionary information in which the posture information indicating a posture of the skeleton model SM1 expressing the skeleton of the individual OB and the music information indicating musical notation in a musical score corresponding to an existing musical score are associated with each other. Subsequently, having acquired the posture dictionary information, the generating unit 132 refers to the musical-score-information storage unit 123, and acquires a file in the MIDI data format (MIDI Like data) corresponding to a musical score that is identified by the musical score ID included in the posture dictionary information. Subsequently, having acquired the posture dictionary information and the file in the MIDI data format (MIDI Like data), the generating unit 132 generates the simulation video SI that shows a swimming motion of the individual OB by changing postures of the skeleton model SM1 over time according to the file in the MIDI data format (MIDI Like data).

More specifically, the generating unit 132 generates the simulation video SI by changing postures of the entire body of the skeleton model SM1 over time according to the main melody of the musical score based on the posture dictionary information and the file in the MIDI data format (MIDI Like data). Moreover, the generating unit 132 generates the simulation video by changing postures of the joint groups constituting the skeleton model SM1 according to melodies other than the main melody of the musical score based on the posture dictionary information and the file in the MIDI data format (MIDI Like data). For example, the generating unit 132 generates the simulation video SI by changing angles of the respective joints over time according to the other melodies.

Subsequently, having generated the simulation video SI, the generating unit 132 generates training data of deep learning by using the generated simulation video SI. Specifically, having generated the simulation video SI, the generating unit 132 uses the generated simulation video SI as the input data TID for the training data.

Moreover, the generating unit 132 generates the label information based on the parameter information that has been used for simulation of the simulation video SI. Subsequently, having generated the label information, the generating unit 132 generates the ground truth data TOD including the simulation video SI and the label information. Specifically, the generating unit 132 automatically generates the label information based on the parameter information that has been used for simulation. For example, the generating unit 132 generates the label information based on individual identification information to identify the individual OB, the position information of the individual OB, and the posture information indicating a posture of the skeleton model SM1 expressing the skeleton of the individual OB, as the parameter information. Subsequently, having generated the label information, the generating unit 132 generates the ground truth data TOD by adding the label information to the simulation video SI, which is the input data TID.

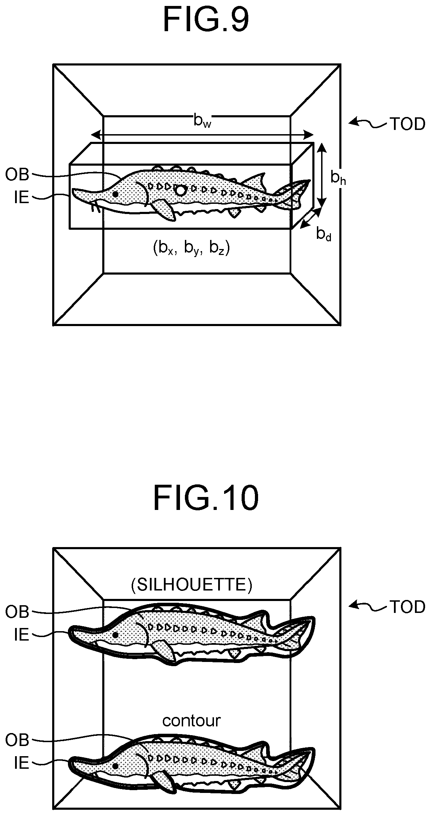

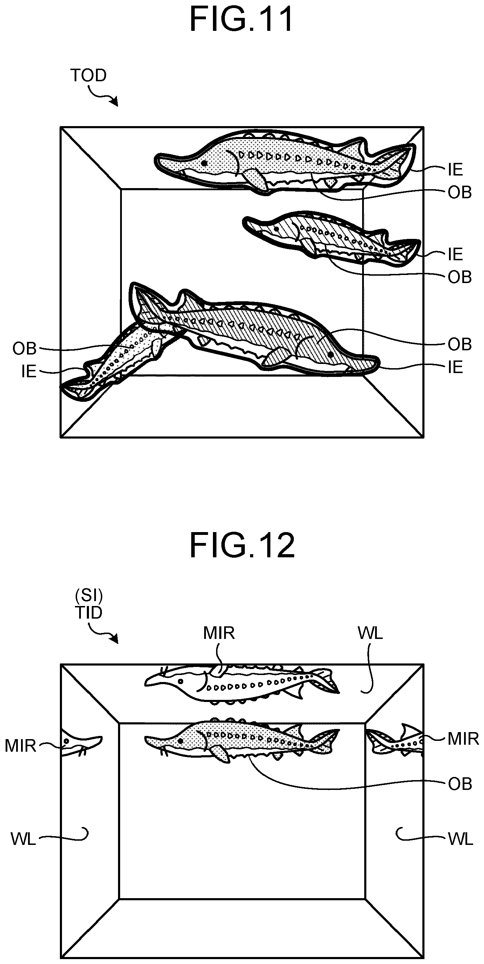

Moreover, the generating unit 132 generates the ground truth TOD including the image element IE to identify the individual OB. For example, the generating unit 132 automatically generates the image element IE based on the position information of the individual OB that has been used for simulation. Variations of the image element IE will be explained by using FIG. 9 to FIG. 11. FIG. 9 to FIG. 11 are diagrams illustrating variation of the image element IE. The generating unit 132 may generate the variations of the image element IE as illustrated in FIG. 9 to FIG. 11 automatically based on the position information of the individual OB that has been used for simulation. The example in FIG. 9 is a reiteration of the boundary cube illustrated in FIG. 1. The example in FIG. 10 is an example in which the individual OB is replaced with its silhouette, or an example with an outline of the individual OB traced in a bold line. The example in FIG. 11 is an example in which the plural individuals OB are color-coded. The boundary cube in FIG. 9 and the outline in FIG. 10 correspond to the frame element surrounding the individual OB. The color coding in FIG. 11 corresponds to assigning the color element. When a plurality of the individuals OB are present, colors of the frame element may be different for each of the individuals OB, or may be different according to the classification information of the individual OB.

Subsequently, having generated the input data TID and the ground truth data TOD, the generating unit 132 performs machine learning (supervised learning) using the input data TID and the ground truth data TOD as the training data in the deep learning network (DNN). Specifically, the generating unit 132 generates the trained DNN (analysis model) by having the DNN (analysis model) trained such that the ground truth data TOD is output from the DNN (analysis model) when the input data TID is input to the DNN (analysis model).

Furthermore, having generated the analysis model, the generating unit 132 generates a musical score that is the chronological data of musical notation that corresponds to a posture of the skeleton model SM1 expressing the skeleton of the individual OB from the captured image CI in which the individual OB is captured, by using the generated analysis model. Specifically, the acquiring unit 131 acquires the analysis model generated by the generating unit 132. When the captured image CI is input to the analysis model acquired by the acquiring unit, the generating unit 132 extracts the classification information, the position information, and the posture information of each of the individuals OB included in the captured image CI by using the analysis model. Subsequently, having extracted the posture information of each of the individuals OB by using the analysis model, the generating unit 132 generates a musical score that is the chronological data of musical notation corresponding to the posture of the skeleton model SM1 indicated by the extracted posture information, by referring to the posture-dictionary-information storage unit 122. For example, the generating unit 132 generates the part of the main melody that is the chronological data of musical notation corresponding to the posture of the entire body of the skeleton model SM1 indicated by the estimated posture information. Furthermore, the generating unit 132 generates the part of a melody other than the main melody that is the chronological data of musical notation corresponding to postures of the respective joint groups of the skeleton model SM1 indicated by the estimated posture information.

The generating unit 132 generates a musical score when an abnormal behavior by the individual OB is detected. For example, the generating unit 132 determines whether an abnormal behavior of the individual OB has occurred based on the posture information of the individual OB that has been estimated by using the analysis model. Subsequently, when it is determined that an abnormal behavior of the individual OB has occurred, the generating unit 132 generates the musical score corresponding to the abnormal behavior of the individual OB. The output control unit 134 controls to output an alert sound that is played based on the musical score generated by the generating unit 132 to a terminal device of a manager of the individual OB.

FIG. 12 and FIG. 13 are diagrams explaining machine learning to remove noises. The generating unit 132 can perform machine learning to remove noises included in the captured image CI to increase the accuracy of image analysis by DNN. For example, when imaging is performed with a camera place in a tank, a reflection image MIR of the individual OB that moves near a water surface WS or a wall surface WL is reflected on the water surface WS or the wall surface WL. A shade SH of the individual OB is projected on a bottom of the tank. The reflection image MIR and the shade SH are to be noises, and can decrease the accuracy of image analysis. Therefore, for example, the generating unit 132 may generate the simulation image SI of the reflection image MIR and the shade SH, and may generate the training data using the simulation image SI.

In the example in FIG. 12, the generating unit 132 generates the simulation image SI that includes the individual OB and the reflection image MIR as the input data TID. The ground truth data TOD is the simulation image SI in which the reflection image MIR is removed from the input data TID. When this input data TID and the ground truth data TOD are used as the training data, DNN to remove the reflection image MIR from the captured image CI can be obtained. In the example in FIG. 12, the individual OB is included in the input data TID and the ground truth data TOD, but the individual OB is not necessarily required to be included in these data. For example, even when training data from which the individual OB is deleted from the input data TID and the ground truth data TOD described above is used, DNN to remove the reflection image MIR is generated.

In the example in FIG. 13, the generating unit 132 generates the simulation image SI that includes the individual OB and the shape SH as the input data TID. The ground truth data TOD is the simulation image SI in which the shade SH is removed from the input data TID. When this input data TID and the ground truth data TOD are used as the training data, DNN to remove the shade SH from the captured image CI can be obtained. In the example in FIG. 13, the individual OB is included in the input data TID and the ground truth data TOD, but the individual OB is not necessarily required to be included in these data. For example, even when training data in which the individual OB is deleted from the input data TID and the ground truth data TOD described above is used, DNN to remove the shade SH is generated.

Furthermore, the generating unit 132 generates the simulation image SI of the individual Ob by using the individual model 24. The individual model 24 is a simulation model based on morphological features of the individual OB. Hereinafter, an overview of the simulation model will be explained. FIG. 14 is a diagram illustrating an example of the individual model 24.

The individual model 24 is generated based on a structure of the body of the individual OB. As the individual model 24, for example, a musculoskeletal model is used. A musculoskeletal model SBM is obtained by dissecting the individual OB having standard shape and size, and by analyzing a skeleton of the individual OB and muscle attachment to the skeleton. FIG. 14 illustrates the musculoskeletal SBM of a sturgeon. From the musculoskeletal SBM, a standard model RM of the individual OB is replicated. From the standard model RM, at least one variation models MM1 to MMn (n is a positive integer equal to or larger than 1) are generated, deviated therefrom. The standard model RM and the variation models MM1 to MMn are to be the respective individual models 24. The individual model 24 is used as the classification information of the individual OB.

The variation model is a three-dimensional model of the individual OB having a morphological abnormality. Most individuals OB born through aquaculture are known to have physical abnormalities (for example, a fin is bent, a shape of a fin is varied, and an internal organ has disorders). Therefore, as the variation model of the individual OB, for example, models relating to an abnormality in a pectoral fin (for example, a pectoral fin is bent), ab abnormality in a dorsal fin (for example, a dorsal fin is bent), an abnormality in a caudal fin (for example, a caudal fin is bent), and an abnormality in an outline (for example, a contour of a head is deformed from a normal individual) and the like are generated. The variation model is not limited to the above. What kind of variation models are to be generated is determined individually according to a type of the individual OB or an environment in which the individual OB is placed.

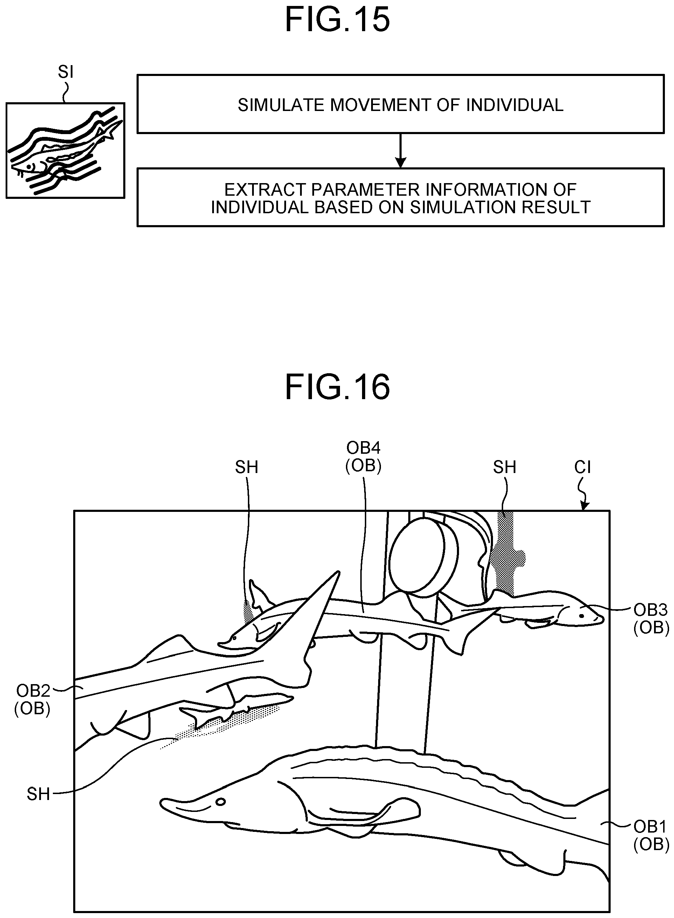

FIG. 15 is a diagram illustrating a simulation video of the individual OB. The generating unit 132 generates the simulation video showing a movement of the individual OB by changing postures of the individual OB overtime according to the musical score based on the posture dictionary information acquired by the acquiring unit 131. With the individual model 24, movement features acquired by the simulation video are associated. The generating unit 132 extracts features (movement features) of a swimming motion for each of the individual model 24. The swimming motion of the individual OB varies depending on morphological features of the individual OB. For example, the individual OB that has a physical abnormality swims in a manner to cover the abnormality. Therefore, features of a swimming motion differ for each of the individual model 24. The features of a swimming motion can be used as parameter information to identify the individual OB. The parameter information indicating movement features of the individual OB is associated with the individual model 24, and is used as the classification information.

FIG. 16 is a diagram illustrating a sturgeon raised in a tank. Most sturgeons of a fish farm have some physical abnormalities. For example, in an individual OB1 to an individual OB4, shapes of the pectoral fin, the dorsal fin, and the caudal fin are not uniform, and the contours thereof also vary subtly. Accordingly, to each sturgeon, the variation model according to the physical abnormality can be assigned. Even sturgeons to which the same variation model is assigned have various degrees of physical abnormalities. Therefore, the parameter information indicating movement features of the individual OB varies for each sturgeon. Therefore, the generating unit 132 detects the parameter information of each of the individual OB by the simulation video, and identifies each of the individual OB based on the detected parameter information.

### (Estimating Unit 133)

The estimating unit 133 estimates the individual identification information to identify the individual OB, the position information of the individual OB, and the posture information indicating a posture of the skeleton model SM1 expressing the skeleton of the individual OB from the captured image CI of the individual OB, by using the analysis model generated by the generating unit 132. For example, when the captured image CI is input to the analysis model, the estimating unit 133 extracts the classification information, the position information, and the posture information of each of the individual OB from the captured image CI by using the analysis model. Furthermore, the estimating unit 133 generates the label information that includes the classification information, the position information, and the posture information for each of the individual OB. Furthermore, the estimating unit 133 generates the image element IE for each of the individual OB based on the position information of each of the individual OB. Having generated the image element IE, the estimating unit 133 generates the correction image CCI in which the image element IE of each of the individual OB is added to the captured image CI. The estimating unit 133 generates the output data ROD by adding the label information of each of the individual OB to the correction image CCI.

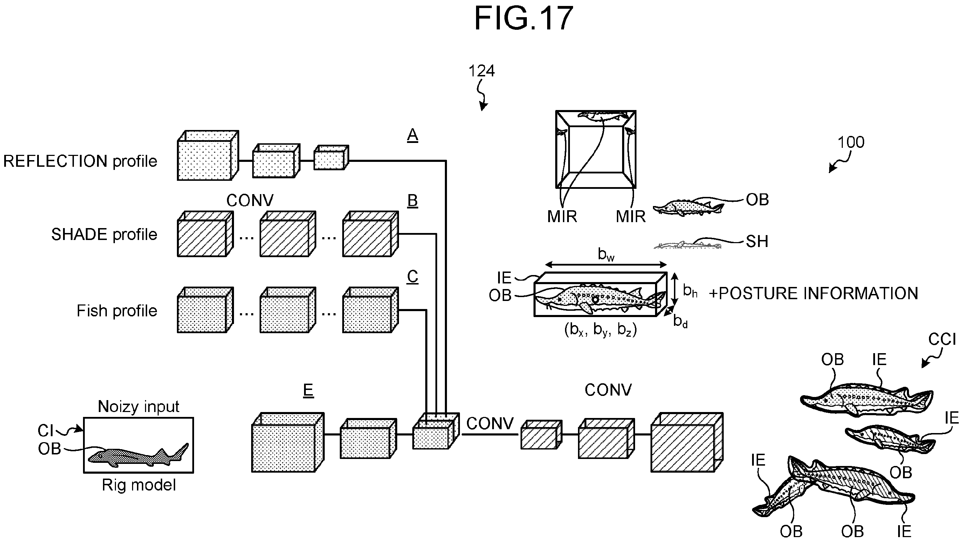

Next, tracking of an individual according to the embodiment will be explained by using FIG. 17. FIG. 17 is a diagram illustrating an example of the tracking of an individual according to the embodiment. The analysis model 124 includes DNNA, DNNB, DNNC, and DNNE. DNNA is DNN to remove the reflection image MIR. DNNB is DNN to remove the shadow SH. DNNC is DNN to extract the classification information, the position information, and the posture information of the individual OB. DNNE is DNN to add the image element IE to each of the individual OB based on the classification information, the position information, and the posture information of the individual OB extracted by DNNC.

The estimating unit 133 adds the image element IE to each of the individual OB shown in the captured image CI by applying the captured image CI to the analysis model 124. In the example in FIG. 17, as the image element IE, different color elements are given for each of the individual. The color of the individual OB varies according to the size, shape, and the like of the individual OB. The size of the individual OB is extracted from the position information of the individual OB. The shape of the individual OB is extracted from the classification information (morphological features) of the individual OB. The estimating unit 133 detects the plural individuals OB based on the image element IE added given to the individual OB, and tracks each of the individual OB individually.

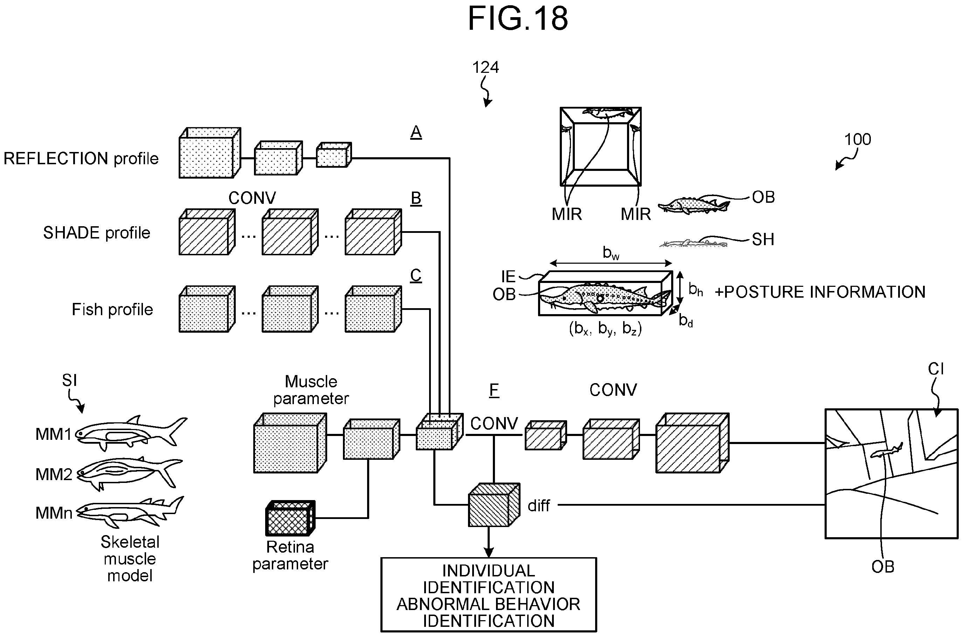

FIG. 18 is a diagram illustrating an example of an identification method of an individual, and a detecting method of an abnormal behavior. The analysis model 124 includes DNNA, DNNB, DNNC, and DNNF. DNNF is a DNN to extract the parameter information of the individual OB.

The simulation video SI for training of DNNF is a simulation image of the individual OB generated by using the individual model 24. The label information of the training data of DNNF is generated based on the parameter information of the individual OB that is applied to the individual model 24. When the captured image CI of the individual OB is input to DNNF, the parameter information corresponding to morphological features of the individual OB (individual model 24) is extracted.

The estimating unit 133 estimates the label information of each of the individual OB from the captured image CI by using the analysis model 124. The estimating unit 133 extracts the parameter information of the individual OB based on the label information of the individual OB for each of the individual OB. The extracted parameter information of the individual OB includes, for example, parameter information of muscle parameter applied to the musculoskeletal model of the individual OB and parameter information indicating movement features of the individual OB that is associated with the individual model 24. The estimating unit 133 identifies each of the individual OB based on the parameter information of each of the individual OB.

At the identification step described above, first, the estimating unit 133 generates the simulation image SI of the individual OB based on the parameter information of the individual OB. The estimating unit 133 corrects the parameter information of the individual OB until a difference between the simulation image of the individual OB and the captured image CI satisfies a predetermined condition. A difference diff is calculated based on a difference between features of the captured image CI and features of the simulation image SI. The estimating unit 133 identifies the individual OB based on the parameter information of the individual OB corrected until the above condition is satisfied.

### (Output Control Unit 134)

The output control unit 134 controls to output a sound played based on a musical score generated by the generating unit 132 to a terminal device that is used by a manager of the individual OB. For example, the generating unit 132 generates a musical score when an abnormal behavior of the individual OB is detected. The output control unit 134 controls to output an alert sound played based on the musical score generated by the generating unit 132 to the terminal device that is used by the manager of the individual OB.

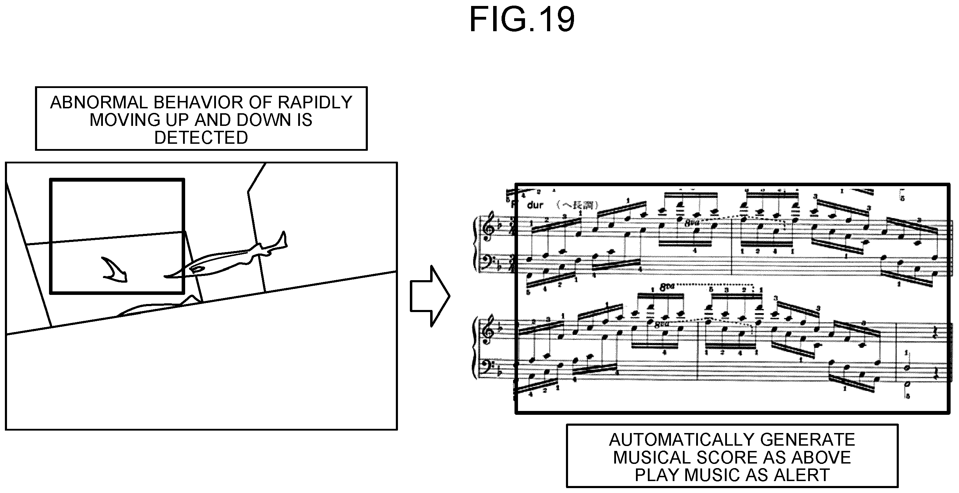

FIG. 19 to FIG. 20 are diagrams illustrating an example of the alert sound output when an abnormal behavior is detected according to the embodiment. In the example illustrated in FIG. 19, the generating unit 132 generates a musical score illustrated on the right side of FIG. 19 when an abnormal behavior of moving up and down rapidly in a tank of the individual OB is detected. The output control unit 134 controls to output an alert sound played based on the musical score illustrated on the right side of FIG. 19 that is generated by the generating unit 132 to the terminal device used by the manager of the individual OB.

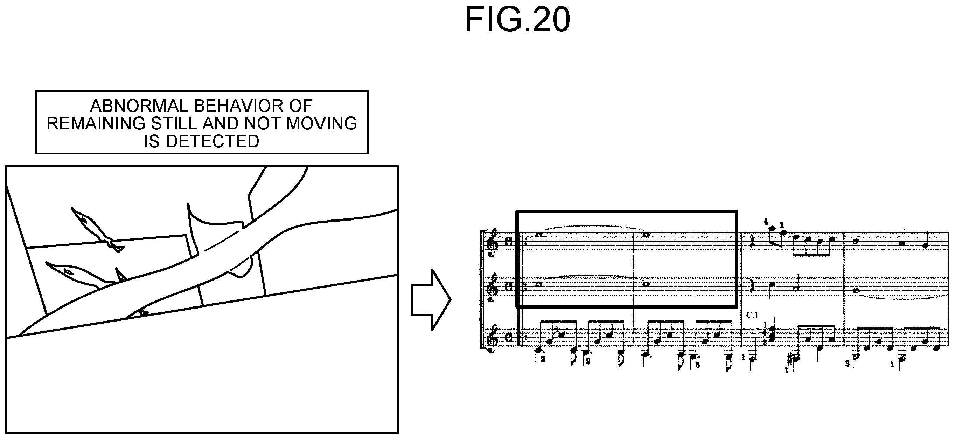

Moreover, in the example illustrated in FIG. 20, the generating unit 132 generates a musical score illustrated on the right side of FIG. 20 when an abnormal behavior of not moving at the bottom of a tank of the individual OB is detected. The output control unit 134 controls to output an alert sound played based on the musical score illustrated on the right side of FIG. 20 that is generated by the generating unit 132 to the terminal device used by the manager of the individual OB.

### [5. Information Processing Method]

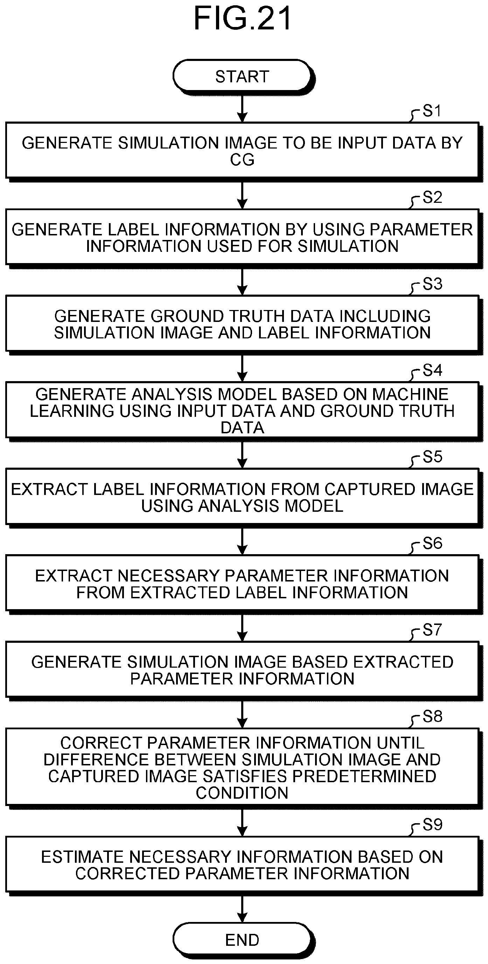

FIG. 21 is a flowchart illustrating an example of an information processing method of the present disclosure.

At step S1, the generating unit 132 generates the simulation image SI to be the input data TID by CG.

At step S2, the generating unit 132 generates the label information based on the parameter information that has been used for simulation.

At step S3, the generating unit 132 generates the ground truth data TOD including the simulation image SI and the label information.

At step S4, the generating unit 132 generates the analysis model based on machine learning in which the input data TID and the ground truth data TOD are training data.

At step S5, the estimating unit 133 extracts the label information from the captured image CI by using the analysis model.

At step S6, the estimating unit 133 extracts necessary parameter information from the extracted label information.

At step S7, the estimating unit 133 generates the simulation image SI based on the extracted parameter information.

At step S8, the estimating unit 133 calculates a difference between the simulation image SI and the captured image CI, and generates the simulation image SI by correcting the parameter information when the difference does not satisfy a predetermined condition. The estimating unit 133 repeats correction of the parameter information and the generation of the simulation image SI until the difference satisfies the above condition.

At step S9, the estimating unit 133 estimates necessary information based on the parameter information corrected until the above condition is satisfied.

The generating unit 132 may generate the simulation video SI that shows swimming motions of the plural individuals OB. The generating unit 132 may generate the simulation video SI in which collision is avoided so that the plural individuals OB do not collide with each other. Thus, the information processing apparatus 100 can vary respective movements of the plural individuals OB even if all the musical scores associated with the posture information of the plural individual OB are the same because directions in which the respective plural individuals OB travel after the collision is avoided vary.

### [6. Modification]

The information processing apparatus 100 according to the embodiment described above may be implemented by various different forms other than the embodiment described above. Therefore, in the following, other embodiments of the information processing apparatus 100 will be explained. The same reference symbols are assigned to same parts as the embodiment, and the explanation will be omitted.

Specifically, in the embodiment described above, an example in which a subject is the individual OB of fish has been explained, but the subject may be an individual of creatures other than fish. Moreover, the subject is not limited to an individual of an actually existing creature. For example, the subject may be a CG character created by computer graphics.

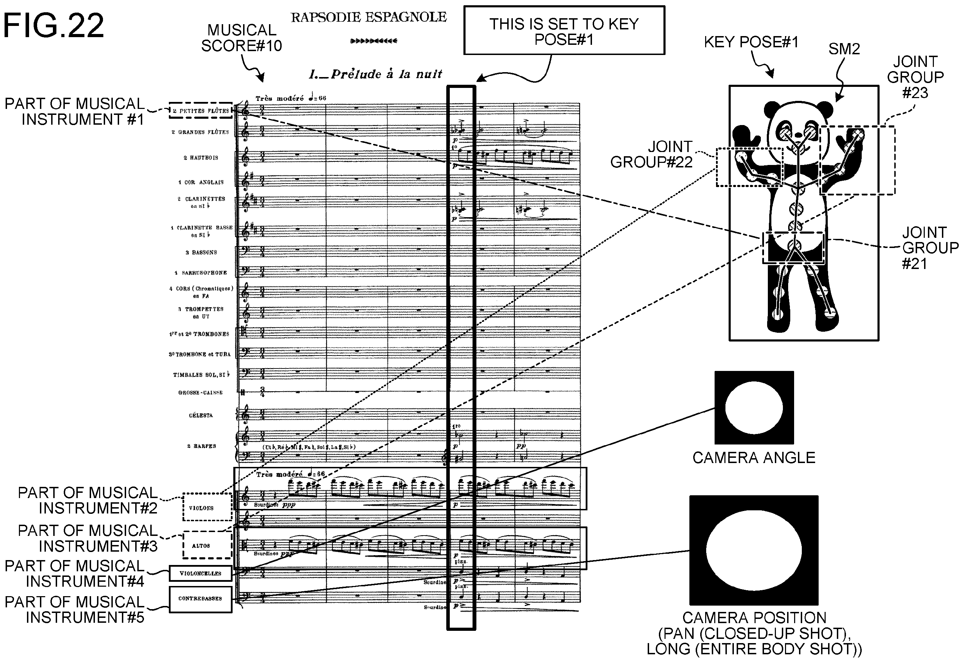

In the following, an example in which the information processing apparatus 100 generates a simulation video showing a movement of a CG character will be explained by using FIG. 22 to FIG. 26, by changing postures of the CG character over time according to a musical score corresponding to a BGM based on the posture dictionary information in which posture information indicating a posture of a skeleton model SM2 expressing a skeleton of a subject, which is the CG character, and music information indicating musical notation in a musical score corresponding to the BGM of the simulation video (hereinafter, also referred to as animation video) showing a movement of the CG character are associated with each other

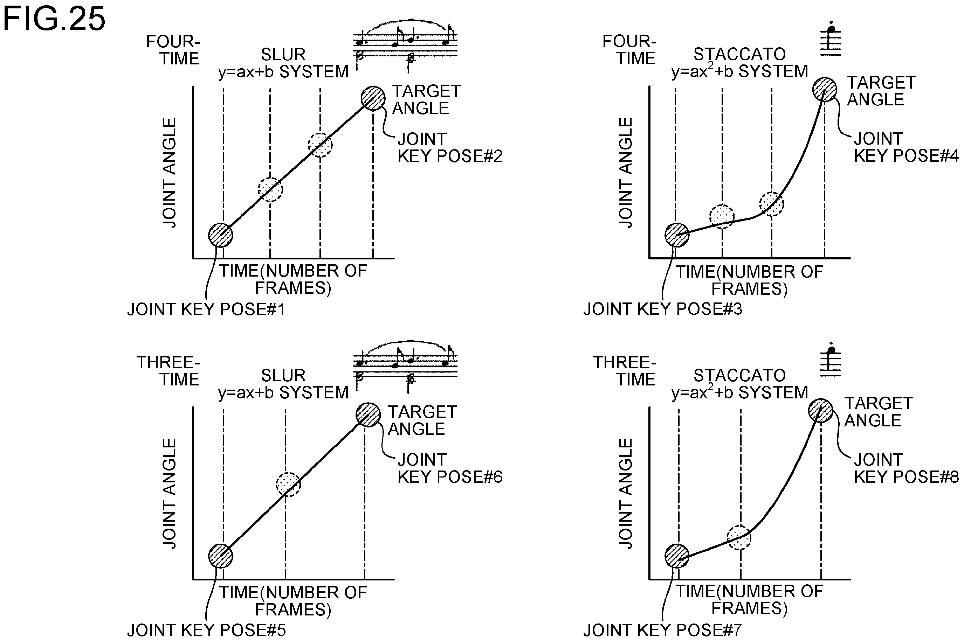

First, before explaining about FIG. 22, key frame animation, which is a common method of generating an animation video, will be explained. Generally, an animation video is a technique that shows as if a subject in images is moving by successively displaying still images of contents slightly different from one another. Each piece of still image constituting this animation video is called frame. In key frame animation, from among postures constituting a series of movement of a CG character, some particularly important postures (key poses) are selected. A frame including the selected key pose is set as a key frame. The key frames are arranged along the timeline, and frames between the key frames are automatically interpolated. Interpolation of frames between key frames will be explained in detail in FIG. 25 described later.

Hereinafter, the posture dictionary information according to the modification will be explained by using FIG. 22. A left side of FIG. 22 illustrates the musical score #10 of orchestra for playing BGM of the animation video. Moreover, a right side of FIG. 22 illustrates the skeleton model SM2 expressing the skeleton of a CG character. In FIG. 22, posture information indicating a key pose #1 that is a specific posture of the CG character and music information indicating musical notation at a predetermined timing in a horizontal axis of the musical score #10 are associated with each other. The acquiring unit 131 acquires posture dictionary information in which the posture information indicating the key pose #1 of the CG character and the music information indicating the musical notation at the predetermined timing in the horizontal axis of the musical score #10 are associated with each other. Moreover, the posture information indicating a posture other than the key pose #1 and music information indicating musical notation in a portion other than the predetermined timing in the horizontal axis of the musical score #10 are associated with each other. The acquiring unit 131 acquires posture dictionary information in which the posture information indicating the posture other than the key pose #1 of the CG character and the music information indicating the musical notation in the part other than the predetermined timing in the horizontal axis of the musical score #10 are associated with each other.

For example, the acquiring unit 131 acquires posture dictionary information in which a note at the predetermined timing in the horizontal axis of the part of the instrument #1 constituting the musical score #10 of orchestra and a posture of the key pose #1 of a joint group #21 constituting the skeleton model SM2 are associated with each other. Moreover, the acquiring unit 131 acquires posture dictionary information in which a note in a part other than the predetermined timing in the horizontal axis of the part of the instrument #1 constituting the musical score #10 of orchestra and a posture other than the key pose #1 of the joint group #21 are associated with each other.

Moreover, the acquiring unit 131 acquires posture dictionary information in which a note at a predetermined timing in the horizontal axis of the part of the instrument #2 constituting the musical score #10 of orchestra and a posture of the key pose #1 of the joint group #22 constituting the skeleton model SM2 are associated with each other. Furthermore, the acquiring unit 131 acquires posture dictionary information in which a note at a timing other than the predetermined timing in the horizontal axis of the part of the instrument #2 constituting the musical score #10 of orchestra and a posture other than the key pose #1 of the joint group #22 are associated with each other.

Moreover, the acquiring unit 131 acquires posture dictionary information in which a note at a predetermined timing in the horizontal axis of the part of the instrument #3 constituting the musical score #10 of orchestra and a posture of the key pose #1 of a joint group #23 constituting the skeleton model SM2 are associated with each other. Furthermore, the acquiring unit 131 acquires posture dictionary information in which a note at a timing other than the predetermined timing in the horizontal axis of the part of the instrument #3 constituting the musical score #10 of orchestra and a posture other than the key pose #1 of the joint group #23 are associated with each other.

Moreover, the acquiring unit 131 acquires camera-posture dictionary information in which a note at a predetermined timing in the horizontal axis of the part of the instrument #4 constituting the musical score #10 of orchestra and camera posture information indicating an angle of a virtual camera corresponding to a perspective of a viewer that sees the CG character taking the key pose #1 that is positioned in virtual space generated by computer graphics are associated with each other. Furthermore, the acquiring unit 131 acquires camera-posture dictionary information in which a note at a timing other than the predetermined timing in the horizontal axis of the part of the instrument #4 constituting the musical score #10 of orchestra and camera posture information indicating an angle of the virtual camera corresponding to the perspective of the viewer seeing the CG character taking a pose other than the key pose #1 that is positioned in the virtual space generated by computer graphics are associated with each other.

Moreover, the acquiring unit 131 acquires camera-posture dictionary information in which a note at a predetermined timing in the horizontal axis of the part of the instrument #5 constituting the musical score #10 of orchestra and camera posture information indicating an angle of the virtual camera corresponding to the viewpoint of the viewer that sees the CG character taking the key pose #1 that is positioned in the virtual space generated by computer graphics are associated with each other. Furthermore, the acquiring unit 131 acquires camera-posture dictionary information in which a note at a timing other than the predetermined timing in the horizontal axis of the part of the instrument #5 constituting the musical score #10 of orchestra and camera posture information indicating an angle of the virtual camera corresponding to the viewpoint of the viewer seeing the CG character taking a pose other than the key pose #1 that is positioned in the virtual space are associated with each other.

By changing postures (positions and angles) of the virtual camera over time, an animation video rendered as if a technique of camera work in film shooting were used can be generated. For example, pan and tilt in which the angle of the virtual camera (line of sight) is moved in left and right directions and up and down directions, fixing the position (viewpoint) of the virtual camera, tracking in which the viewpoint is moved parallelly to a direction perpendicular to the line of sight, dolly of moving parallelly to a direction of line of sight, tumble of fixing a point of focus (position of the CG character) and moving around it, zoom, and the like are considered. In the example illustrated in FIG. 22, the camera postures corresponding to pan (close-up shot of a predetermined part of the CG character) or long shot (entire body shot of the CG character) may be taken in accordance with the timing at which the CG character takes the key pose #1.

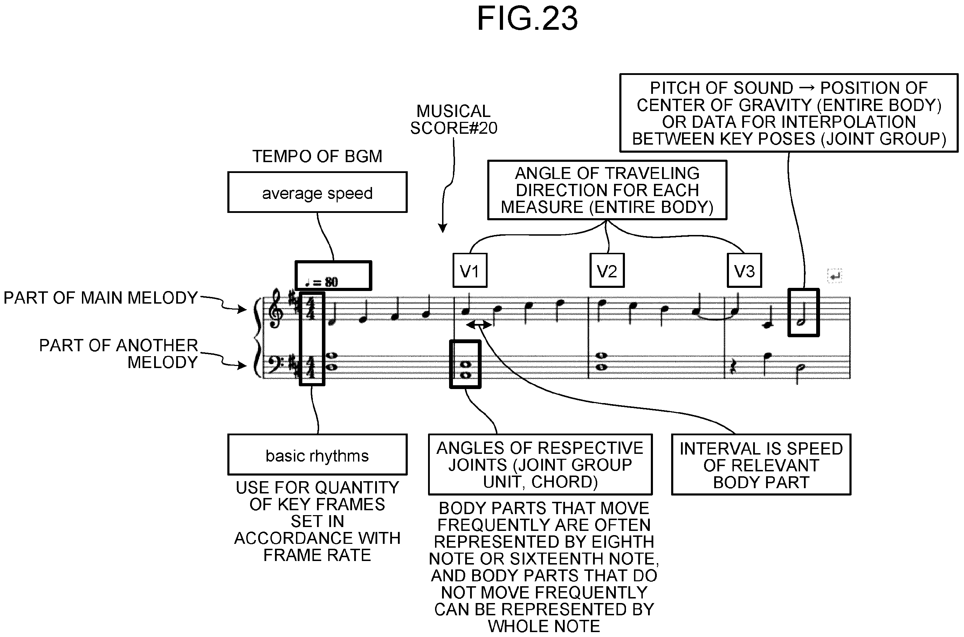

Next, posture dictionary information according to the modification will be explained by using FIG. 23. In an example illustrated in FIG. 23, the part of the main melody of the musical score #20 of orchestra for playing the BGM of the animation video and the entire body of the CG character are associated with each other. Specifically, the note in the part of the main melody indicates a posture of the entire body of the CG character that is associated with the note. The acquiring unit 131 acquires posture dictionary information in which the note in the part of the main melody and the posture of the entire body of the skeleton model SM2 are associated with each other.

Moreover, a duration of a sound of a note in the part of the main melody indicates a duration of maintaining a posture of the entire body of the skeleton model SM2 that is associated with the note. The acquiring unit 131 acquires posture dictionary information in which a duration of a sound of a note in the part of the main melody and a duration of maintaining a posture of the entire body of the skeleton model SM2 are associated with each other.

Furthermore, a pitch of a sound of a note in the part of the main melody indicates a height of a center position (position of center of gravity) of the entire body of the skeleton model SM2 that is associated with the note. The acquiring unit 131 acquires posture dictionary information in which a pitch of a sound of a note in the part of the main melody and a height of the center position of the entire body of the skeleton model SM2 are associated with each other.

Moreover, a tempo marking of a musical score illustrated in FIG. 23 indicates a tempo of the BGM of the animation video and an average speed of the entire body of the skeleton model SM2 (that is, the CG character). The acquiring unit 131 acquire posture dictionary information in which a tempo marking of a musical score and an average speed of the entire body of the skeleton model SM2 are associated with each other.

Furthermore, a time signature of the musical score illustrated in FIG. 23 indicates a basic rhythm in which the entire body of the skeleton model SM2 (that is, the CG character) moves. More specifically, the time signature of the musical score corresponds to the number of key frames set in accordance with a frame rate (the number of frames displayed per one second in a video) of the animation video. The acquiring unit 131 acquires posture dictionary information in which a time signature of a musical score and the number of key frames set in accordance with a frame rate are associated with each other.

Moreover, the codes V1, V2, and V3 assigned per measure of the part of the main melody illustrated in FIG. 23 indicate angles of traveling directions of the entire body of the skeleton model SM2 (that is, the CG character). Specifically, V1, V2, and V3 respectively represent vectors indicating a traveling direction of the entire body of the skeleton model SM2 when the entire body of the skeleton model SM2 is regarded as one vector. The acquiring unit 131 acquires posture dictionary information in which respective measures of the part of the main melody and respective vectors indicating an angle of a traveling direction of the entire body of the skeleton model SM2 are associated with each other.

As described above, in the example illustrated in FIG. 23, the acquiring unit 131 acquires posture dictionary information in which the respective notes of the part of the main melody constituting the musical score #20 of orchestra for playing the BGM of the animation video and the respective postures of the entire body of the CG character are associated with each other. Moreover, the generating unit 132 generates a simulation video that shows a movement of posture of the entire body of the CG character by changing postures of the entire body of the CG character over time according to the main melody based on the posture dictionary information in which the respective notes of the part of the main melody and the respective postures of the entire body of the CG character are associated with each other.

Furthermore, in the example illustrated in FIG. 23, a part of a melody other than the main melody of the musical score #20 of orchestra and a predetermined joint group constituting a skeleton model of the CG character are associated with each other. Specifically, a chord symbol representing a chord in the part of the other melody indicates posture of a joint group that is associated with the chord symbol representing the chord. The acquiring unit 131 acquires posture dictionary information in which a chord symbol representing a chord in a part other than the main melody and a posture (angle) of a joint group constituting the skeleton model SM2 are associated with each other.

Moreover, respective notes constituting a chord in the part of the other melody indicates postures (angles) of respective joints constituting a joint group that is associated with the chord. The acquiring unit 131 acquires posture dictionary information in which respective notes constituting a chord in the part of the other melody and postures (angles) of respective joints constituting a joint group that constitutes the skeleton model SM2 are associated with each other. That is, the acquiring unit 131 acquires the posture dictionary information in which the notes in the part of the other melody and the postures (angles) of the joints constituting the skeleton model SM2 are associated with each other.

Moreover, a duration of a sound of a note in the part of the other melody indicates a duration of maintaining a posture (angle) of a joint that is associated with the note. The acquiring unit 131 acquires posture dictionary information in which a duration of a sound of a note in the part of the other melody and a duration of maintaining a posture (angle) of a joint constituting the skeleton model SM2 are associated with each other. Furthermore, for example, a joint part that moves frequently can be represented by a short duration note, such as eight note and sixteenth note. Moreover, a joint part that does not move frequently can be represented by a chord constituted of long notes of a long duration of sound, such as whole note. As described, types of notes associated as a duration of maintaining a posture (angle) of a joint may be determined according to frequency of movement of a joint part.

Furthermore, a pitch of a sound of a note in the part of the other melody indicates a posture (angle) of a joint) that is associated with the note. The acquiring unit 131 acquires posture dictionary information in which posture information indicating a range of motion of a posture of a joint (group) and music information indicating a range of pitch of sounds of notes in the part of the other melody are associated with each other. For example, the acquiring unit 131 acquires posture dictionary information in which an upper limit value of an angle of motion of a posture of a joint (group) and a pitch of a sound of a note that represents the highest pitch among the notes in the part corresponding to the other melody are associated with each other. Furthermore, the acquiring unit 131 acquires posture dictionary information in which a lower limit value of an angle of motion of a posture of a joint (group) and a pitch of a sound of a note that represents the lowest pitch among the notes in the part corresponding to the other melody are associated with each other.

Moreover, a note in the part of the other melody is used for interpolation between key poses of a joint group that is associated with the note. This point is explained in detail by using FIG. 25 described later.

As described above, in the example illustrated in FIG. 23, the acquiring unit 131 acquires posture dictionary information in which respective notes in a part of a melody other than the main melody constituting the musical score #20 of orchestra and respective postures of a predetermined joint group of the CG character are associated with each other. Furthermore, the generating unit 132 generates a simulation video that shows a movement of a body part corresponding to a predetermined joint group of the CG character by changing postures of the predetermined joint group of the CG character over time according to the other melody based on the posture dictionary information in which the respective notes of the part of the other melody and the respective postures of the predetermined joint group of the CG character are associated with each other.

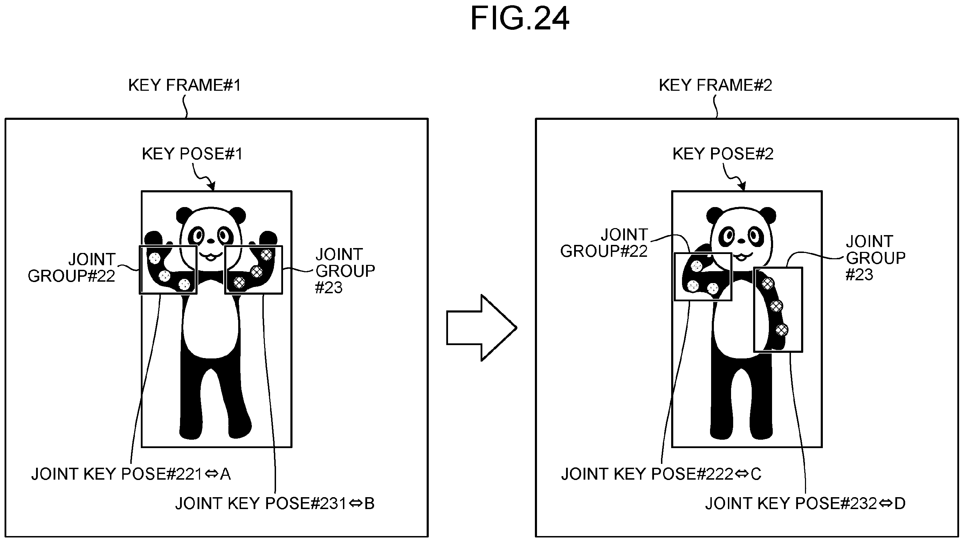

Next, a key pose and a key frame according to the modification will be explained by using FIG. 24. In FIG. 24, a frame including the key pose #1 that is selected from among postures constituting a series of movement of the CG character manually (or by the information processing apparatus 100) is set as key frame #1. Furthermore, similarly, a frame including the key pose #2 that is selected from among postures constituting of a series of movement of the CG character is set as key frame #2. The key frame #1 and the key frame #2 are key frames adjacent to each other in temporal order out of some key frames aligned along a temporal axis.

Hereinafter, the key pose of a joint group (posture of a joint group when the CG character takes the key pose) may be denoted as joint key pose. In the example illustrated on a left side of FIG. 24, a joint key pose #221 indicating the key pose #1 of the joint group #22 is associated with a chord symbol of a chord (for example, a chord symbol of a chord represented by a symbol "A") at the timing set for the key pose #1 in the horizontal axis of the part of the instrument #2 illustrated in FIG. 22. That is, the key pose #1 (angle) of respective three joints constituting the joint group #22 illustrated on the left side of FIG. 24 and a pitch of respective three notes included in the chord represented by the symbol "A" are associated with each other. Moreover, a joint key pose #231 indicating the key pose #1 of the joint group #23 is associated with a chord symbol of a chord (for example, a chord symbol of a chord represented by a symbol "B") at the timing set for the key pose #1 in the horizontal axis of the part of the instrument #3 illustrated in FIG. 22. That is, the key pose #1 (angle) of respective three joints constituting the joint group #23 illustrated on the left side of FIG. 24 and a pitch of respective three notes included in the chord represented by the symbol "B" are associated with each other.

In an example illustrated on a right side of FIG. 24, a joint key pose #222 indicating the key pose #2 of the joint group #22 is associated with a chord symbol of a chord (for example, chord symbol of a chord represented by a symbol "C") at the timing (not illustrated) set for the key pose #2 in the horizontal axis of the part of the instrument #2 in FIG. 22. That is, postures (angles) of respective three joints constituting the joint group #22 illustrated on the right side of FIG. 24 and a pitch of respective three notes included in the chord represented by the symbol "C" are associated with each other. Moreover, a joint key pose #232 indicating the key pose #2 of the joint group #23 is associated with a chord symbol of a chord (for example, chord symbol of a chord represented by a symbol "D") at the timing (not illustrated) set for the key pose #2 in the horizontal axis of the part of the instrument #3 illustrated in FIG. 22. That is, respective postures (angles) of three joints constituting the joint group #23 illustrated on the right side of FIG. 24 and pitches of the respective three notes included in the chord represented by the symbol "D" are associated with each other.

Next, a relationship between an interpolation formula for compensating a posture between key poses and an auxiliary symbol relating to articulation in a musical score according to the modification will be explained by using FIG. 25. Articulation signifies playing instructions relating to how notes are connected or separated. The generating unit 132 generates a simulation video by interpolating a posture between two different key poses of the CG character based on an auxiliary symbol relating to articulation in a musical score. Specifically, the generating unit 132 determines an interpolation formula to calculate a joint angle between two different key poses (two different joint key poses) of respective joint groups of the CG character that are associated with parts of respective instruments based on an auxiliary symbol relating to articulation given to a musical score of the parts of the respective instruments included between timings set respectively for the two key poses that are adjacent to each other in temporal order.

In FIG. 25, as one example of the auxiliary symbol relating to articulation, slur and staccato are explained as an example. Slur is an auxiliary symbol that instructs to play notes in a smoothly connected manner without any separation. Moreover, staccato is an auxiliary symbol that instructs to play notes in a short, detached manner. In four graphs in FIG. 25, a horizontal axis (x axis) indicates time (the number of frames) and a vertical axis (y axis) indicates a joint angle of a joint group. An upper row of FIG. 25 illustrates graphs when a time signature of a musical score is four-time. In the example illustrated in the upper left of FIG. 25, the generating unit 132 determines the interpolation formula to calculate a joint angle of a joint group corresponding to two frames between the joint key pose #1 and the joint key pose #2 to a linear function "y=ax+b" because the auxiliary symbol relating to articulation given to notes of a part of an instrument is slur. On the other hand, in the example illustrated in the upper right of FIG. 25, the generating unit 132 determines the interpolation formula to calculate a joint angle of a joint group corresponding to two frames between the joint key pose #3 and the joint key pose #4 to a quadratic function "y=ax²+b" that change more steeply than a linear function because the auxiliary symbol relating to articulation given to notes of a part of an instrument is staccato.

The lower row of FIG. 25 illustrates graphs when a time signature of a musical score is three-time. In the example illustrated in the lower left of FIG. 25, the generating unit 132 determines the interpolation formula to calculate a joint angle of a joint group corresponding to one frame between the joint key pose #5 and the joint key pose #6 to a linear function "y=ax+b" because the auxiliary symbol relating to articulation given to notes of a part of an instrument is slur. On the other hand, in the example illustrated in the lower right of FIG. 25, the generating unit 132 determines the interpolation formula to calculate a joint angle of a joint group corresponding to one frame between the joint key pose #7 and the joint key pose #8 to a quadratic function "y=ax²+b" that changes more steeply changes than a linear function because the auxiliary symbol relating to articulation given to notes of a part of an instrument is staccato.

When the interpolation formula is determined, the generating unit 132 calculates a joint angle between two different joint key poses based on the determined interpolation formula. Having calculated the joint angle between two different key poses, the generating unit 132 generates a simulation video by changing postures of the joint group over time according to the calculated joint angle. For example, the generating unit 132 generates a simulation video by changing postures of the joint group between two different key poses over time in accordance with a frame rate associated with the time signature of the musical score.

Auxiliary symbols relating to articulation are not limited to slur and staccato. For example, the generating unit 132 may determine a function that changes more steeply than the quadratic function illustrated in FIG. 25 (for example, cubic function) as the interpolation formula when the auxiliary symbol relating to articulation is staccatissimo (auxiliary symbol instructing to play notes even more sharply and detached than staccato). Moreover, auxiliary symbols relating to articulation may be accent (auxiliary symbol instructing to play a note with the symbol adding more emphasis than notes without the symbol positioned before and after it) or tenuto (auxiliary symbol instructing to play a note maintaining a sound adequately).

Moreover, the generating unit 132 may determine the interpolation formula based whether it is major or minor. For example, the generating unit 132 may determine a function that changes steeply to the interpolation formular when it is major. Furthermore, the generating unit 132 may determine a function that changes slowly to the interpolation formula when it is minor.

Furthermore, the generating unit 132 can use any function according to the auxiliary symbol relating to articulation, such as trigonometric function, circular function, and elliptic function, not limited to the linear function or the quadratic function as described above. Moreover, the generating unit 132 can determine not only a function of the interpolation formula, but also a coefficient of a function, according to the auxiliary symbol relating to articulation.

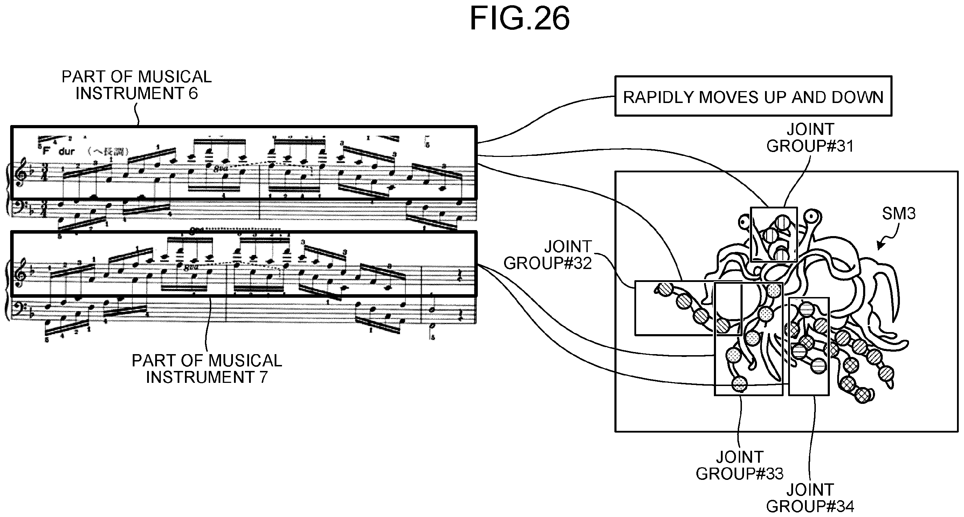

Next, posture dictionary information relating to a skeleton model having a large number of joint groups according to the modification will be explained by using FIG. 26. On a right side of FIG. 26, a skeleton model SM3 of a CG character having a larger number of joint groups than the number of parts of respective instruments in a musical score of orchestra is illustrated. In such a case, plural different joint groups may be associated with a part of a single instrument. In an example illustrated in FIG. 26, respective notes of a part of an instrument #6, and respective postures of a joint group #31 and respective postures of a joint #33 of the CG character may be associated with each other. Moreover, respective notes of a part of an instrument #7, and respective postures of the joint group #33 and respective postures of a joint group #34 of the CG character may be associated with each other. The acquiring unit 131 acquires posture dictionary information in which respective notes of a part of a melody other than a main melody constituting a musical score of orchestra and respective postures of plural different joint groups of the CG character are associated with each other.

To vary movements of the plural joint groups that are associated with the part of the same instrument, it is possible by varying interpolation formulas (functions themselves of the interpolation formula, or coefficients of the function) to be used for interpolation for the plural joint groups. Alternatively, it is possible by varying respective ranges of motion of the plural joint groups that are associated with a part of the same instrument. Alternatively, it is possible by varying postures of upper and lower limits of range of motion of the plural joint groups that are associated with a part of the same instrument.

### [7. Effect]

As described above, the information processing apparatus 100 according to the embodiment includes the generating unit 132. The generating unit 132 generates a simulation video that shows a movement of a subject by changing postures over time according to a musical score based on the posture dictionary information in which posture information indicating a posture of a skeleton model expressing a skeleton of the subject and music information indicating musical notation in the musical score corresponding to an existing musical composition are associated with each other.

Thus, the information processing apparatus 100 can generate a large number of simulation videos that replicate a variety of movements of a subject automatically by using a musical score corresponding to an existing musical composition. Therefore, the information processing apparatus 100 can significantly reduce costs to generate simulation videos that replicate a variety of movements of a subject. Moreover, the information processing apparatus 100 can estimate a variety of movements of a subject included in an image accurately by using the simulation video in which a variety of movements of the subject are replicated as training data of a machine learning model. Furthermore, because a variety of movements of a subject can be accurately estimated, the information processing apparatus 100 can identify an individual subject accurately based on characteristics of a movement of the individual subject.

Moreover, the generating unit 132 generates a simulation video by changing postures of an entire body over time according to a main melody based on the posture dictionary information in which posture information indicating a posture of the entire body of a skeleton model and music information indicating musical notation in a part corresponding to the main melody of an existing musical composition are associated with each other. Specifically, the generating unit 132 generates a simulation video based on the posture dictionary information in which posture information indicating a duration of maintaining a posture of the entire body and music information indicating a duration of a sound of a note in a part corresponding to the main melody are associated with each other. Furthermore, the generating unit 132 generates a simulation video based on the posture dictionary information in which posture information indicating a height of a center position of the entire body and music information indicating a pitch of a sound of a note in the part corresponding to the main melody are associated with each other. Moreover, the generating unit 132 generates a simulation video based on the posture dictionary information in which posture information indicating an average speed of the entire body and music information indicating a tempo marking in the part corresponding to the main melody are associated with each other. Furthermore, the generating unit 132 generates a simulation video based on the posture dictionary information in which posture information indicating a basic rhythm of a movement of the entire body and music information indicating a time signature in the part corresponding to the main melody are associated with each other. Moreover, the generating unit 132 generates a simulation information based on the posture dictionary information in which posture information indicating an angle of a traveling direction of the entire body and music information indicating a vector that is given to respective measures of the part corresponding to the main melody are associated with each other.

Thus, the information processing apparatus 100 can generate a large number of simulation videos that replicate a posture movement of the entire body of the skeleton model automatically.

Moreover, the generating unit 132 generates, based on the posture dictionary information in which posture information indicating a posture of a joint group constituting a skeleton model and music information indicating musical notation in a part corresponding to a melody other than the main melody of an existing musical composition are associated with each other, a simulation video by changing postures of a joint group over time according to the other melody. Specifically, the generating unit 132 generates a simulation video by changing postures of a joint group over time according to the other melody based on the posture dictionary information in which posture information indicating respective different postures of the joint group and music information indicating respective different chords in the part corresponding to the other melody are associated with each other. For example, the generating unit 132 generates a simulation video based on posture dictionary information in which posture information indicating a duration of maintaining a posture of a joint group and music information indicating a duration of a sound of a note in the part corresponding to the other melody are associated with each other. Furthermore, the generating unit 132 generates a simulation video based on the posture dictionary information in which posture information indicating a height of a center position of a joint group and music information indicating a pitch of a sound of a note in the part corresponding to the other melody are associated with each other. Moreover, the generating unit 132 generates a simulation video based on the posture dictionary information in which posture information indicating a range of motion of a posture of a joint group and music information indicating a range of pitch of sound of note in the part corresponding to the other melody are associated with each other.

Thus, the information processing apparatus 100 can generate a large number of simulation videos that replicate a variety of movements of a joint group constituting a skeleton model automatically.

Furthermore, the generating unit 132 generates a simulation video by changing angles of respective joints over time according to the other melody based on the posture dictionary information in which posture information indicating respective angles of plural different joints constituting a joint group and music information indicating respective different notes constituting a chord in the part corresponding to the other melody are associated with each other.

Thus, the information processing apparatus 100 can generate a large number of simulation videos that replicate a variety of movements of joints constituting a skeleton model automatically.

Furthermore, a subject is a CG character generated by computer graphics. The generating unit 132 generates a simulation video based on the posture dictionary information in which posture information indicating a key pose, which is a specific posture of the CG character, and music information indicating musical notation at a predetermined timing in a horizontal axis of a musical score are associated with each other. Moreover, the generating unit 132 generates a simulation video by interpolating a pose between two different key poses of the CG character based on an auxiliary sign relating to articulation in a musical score. Furthermore, the generating unit 132 further generates a simulation video from a viewpoint of a virtual camera by changing postures of the virtual camera over time according to a musical score based on the camera-posture dictionary information in which camera posture information indicating a posture of the virtual camera corresponding to a viewpoint of a viewer that sees the CG character positioned in virtual space generated by computer graphics and music information indicating musical notation in the musical score corresponding to an existing musical composition are associated with each other.

Thus, the information processing apparatus 100 can generate a variety of movements of an arbitrary CG character, and an animation video with a great impact that matches BGM by utilizing camera angles.

Furthermore, the generating unit 132 generates label information based on parameter information that has been used for simulation of a simulation video, and generates ground truth data that includes the simulation video and the label information. Specifically, the generating unit 132 generates the label information based on a subject identification information to identify a subject, position information of the subject, and posture information indicating a posture of a skeleton model expressing a skeleton of the subject, as the parameter information.

Thus, the information processing apparatus 100 generate the label information of ground truth data based on the parameter information that has been used for simulation. The information processing apparatus 100 can automatically generate the label information of ground truth data simultaneously with generation of a simulation video.

Furthermore, the generating unit 132 generates an analysis model by training the analysis model such that when a simulation video is input to the analysis model, ground truth data is output from the analysis model.

Thus, the information processing apparatus 100 can generate an analysis model that is capable of estimating a variety of movements of a subject included in an image accurately by using the simulation video that replicates a variety of movements of a subject as training data of a machine learning model.

Furthermore, the information processing apparatus 100 further includes the estimating unit 133. The estimating unit 133 estimates the subject identification information to identify a subject, the position information of the subject, and the posture information indicating a posture of the skeleton model expressing the skeleton of the subject from a captured image in which the subject is captured, by using the analysis model generated by the generating unit 132.

Thus, the information processing apparatus 100 can estimate a variety of movements of a subject included in an image accurately by using the analysis model that is capable of estimating a variety of movements of a subject included in an image accurately. Furthermore, the information processing apparatus 100 can identify an individual subject accurately based on characteristics of movement of the individual subject.

Moreover, the information processing apparatus 100 further includes the acquiring unit 131. The acquiring unit 131 acquires the analysis model that is trained based on ground truth data that includes a simulation video indicating a movement of a subject generated by changing postures over time based on the posture dictionary information in which posture information indicating a posture of a skeleton model expressing a skeleton of the subject and music information indicating musical notation in a musical score corresponding to an existing musical composition are associated with each other, and the label information that is generated based on parameter information that has been used for simulation of the simulation video. The generating unit 132 generates a musical score that is chronological data of musical notation corresponding to postures of a skeleton model expressing a skeleton of a subject from a captured image in which the subject is captured, by using the analysis model acquired by the acquiring unit 131. Furthermore, the information processing apparatus 100 further includes the output control unit 134. The output control unit 134 controls to output a sound played based on the musical score generated by the generating unit 132 to a terminal device used by a manager of the subject. For example, the generating unit 132 generates a musical score when an abnormal behavior of the subject is detected. The output control unit 134 controls to output an alert sound played based on the musical score generated by the generating unit 132 to a terminal device.

Thus, the information processing apparatus 100 can detect, for example, when the subject is a living creature, such as fish, a movement specific to a deformed creature or an abnormal behavior of an individual creature, and can output a sound based on a musical score corresponding to the movement specific to a deformed creature or the abnormal behavior of an individual creature. Thus, the information processing apparatus 100 can notify of an abnormality of individual creature by an alert sound to a manager of the creature, such as a fish farmer, without observing abnormalities of individual creatures. Moreover, the information processing apparatus 100 can output a different alert sounds according to a type of abnormal behaviors (for example, abnormal behavior of a creature remaining still and not moving, abnormal behavior of hyperactive movement of a creature, and the like). Therefore, the information processing apparatus 100 can support management of creatures by a manager of the creatures, such as a fish farmer.

### [8. Hardware Configuration]

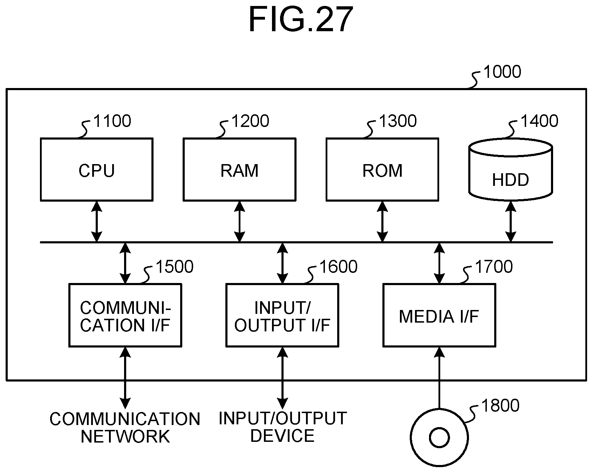

Moreover, the information processing apparatus 100 according to the embodiment described above is implemented, for example, by a computer 1000 configured as illustrated in FIG. 27. FIG. 27 is a hardware configuration diagram illustrating an example of a computer that implements functions of the information processing apparatus 100. The computer 1000 includes a CPU 1100, a RAM 1200, a ROM 1300, an HDD 1400, a communication interface (I/F) 1500, an input/output interface (I/F) 1600, and a media interface (I/F) 1700.

The CPU 1100 operates based on a program stored in the ROM 1300 or the HDD 1400, and controls the respective components. The ROM 1300 stores a boot program executed by the CPU 1100 at the time of activation of the computer 1000, a program dependent on hardware of the computer 1000, and the like.

The HDD 1400 stores a program executed by the CPU 1100, data that is used by the program, and the like. The communication interface 1500 receives data from other devices through a predetermined communication network, to send it to the CPU 1100, and transmits data generated by the CPU 1100 to other devices through a predetermined communication network.

The CPU 1100 controls an output device, such as a display and a printer, and an input device, such as a keyboard and a mouse, through the input/output interface 1600. The CPU 1100 acquires data from the input device through the input/output interface 1600. Moreover, the CPU 1100 outputs the generated data to the output device through the input/output interface 1600.

The media interface 1700 reads a program or data stored in a recording medium 1800, to provide it to the CPU 1100 through the RAM 1200. The CPU 1100 loads the program from the recording medium 1800 onto the RAM 1200 through the media interface 1700, and executes the loaded program. The recording medium 1800 is, for example, an optical recording medium, such as a digital versatile disc (DVD) and a phase change rewritable disk (PD), an optical magnetic recording medium, such as a magneto-optical disk (MO), a tape medium, a magnetic recording medium, a semiconductor memory, or the like.

For example, when the computer 1000 functions as the information processing apparatus 100 according to the embodiment, the CPU 1100 of the computer 1000 executes a program loaded on the RAM 1200 and thereby implements the functions of the control unit 130. The CPU 1100 of the computer 1000 reads these programs from the recording medium 1800 to execute, but as another example, may acquire these programs from another device through a predetermined communication network.

As above, some of the embodiments of the present application have been explained, but these are examples, and the present invention can be implemented by other forms in which various modifications and improvements are applied based on knowledge of those skilled in the art, besides modes described in the section of the disclosure of the invention.

### [9. Others]

Moreover, out of the respective processing explained in the embodiments and the modification, all or some of the processing explained to be performed automatically can also be performed manually, or all or some of the processing explained to be performed manually can also be performed automatically by a publicly known method. Besides, the procedure of processing, the specific names, and the information including various kinds of data and parameters described in the above document or in the drawings can be arbitrarily changed, unless otherwise specified. For example, the respective information illustrated in the respective drawings is not limited to the information illustrated.

Furthermore, the respective components of the respective devices illustrated are of functional concept, and it is not necessarily required to be configured physically as illustrated. That is, specific forms of distribution and integration of the respective devices are not limited to the ones illustrated, and all or some thereof can be configured to be distributed or integrated functionally or physically in arbitrary units according to various kinds of loads, use conditions, and the like.

Moreover, the embodiments and the modification described above can be arbitrarily combined within a range not causing a contradiction in the processing.

Furthermore, the term "section, module, unit" described above can be replaced with "means", "circuit", or the like. For example, the generating unit can be read as generating means or generating circuit.

### Reference Signs List

- 100: INFORMATION PROCESSING APPARATUS
- 110: COMMUNICATION UNIT
- 120: STORAGE UNIT
- 121: MODEL-INFORMATION STORAGE UNIT
- 122: POSTURE-DICTIONARY-INFORMATION STORAGE UNIT
- 123: MUSICAL-SCORE-INFORMATION STORAGE UNIT
- 124: ANALYSIS-MODEL STORAGE UNIT
- 130: CONTROL UNIT
- 131: ACQUIRING UNIT
- 132: GENERATING UNIT
- 133: ESTIMATING UNIT
- 134: OUTPUT CONTROL UNIT

## Claims

1. An information processing program to cause a computer to execute
a generation process of generating a simulation video showing a movement of the subject based on posture dictionary information in which posture information indicating a posture of a skeleton model expressing a skeleton model of a subject and music information indicating musical notation in a musical score corresponding to an existing musical composition are associated with each other, by changing the posture over time according to the musical score.

2. The information processing program according to claim 1, wherein
the generation process includes generating the simulation video, based on the posture dictionary information in which the posture information indicating a posture of an entire body of the skeleton model and the music information indicating musical notation in a part corresponding to a main melody of the existing musical composition are associate with each other, by changing the posture of the entire body over time according to the main melody.

3. The information processing program according to claim 2, wherein
the generation process includes generating the simulation video based on the posture dictionary information in which the posture information indicating a duration of maintaining the posture of the entire body and the music information indicating a duration of sound of a note in the part corresponding to the main melody are associated with each other.

4. The information processing program according to claim 2 or 3, wherein
the generation process includes generating the simulation video based on the posture dictionary information in which the posture information indicating a height of a center position of the entire body and the music information indicating a pitch of a sound of a note in the part corresponding to the main melody are associated with each other.

5. The information processing program according to any one of claims 2 to 4, wherein
the generation process includes generating the simulation video based on the posture dictionary information in which the posture information indicating an average speed of the entire body and the music information indicating a tempo marking in the part corresponding to the main melody are associated with each other.

6. The information processing program according to any one of claims 2 to 5, wherein
the generation process includes generating the simulation video based on the posture dictionary information in which the posture information indicating a basic rhythm of a movement of the entire body and the music information indicating a time signature in the part corresponding to the main melody are associated with each other.

7. The information processing program according to any one of claims 2 to 6, wherein
the generation process includes generating the simulation video based on the posture dictionary information in which the posture information indicating an angle of a traveling direction of the entire body and the music information indicating a vector assigned to respective measures of the part corresponding to the main melody are associated with each other.

8. The information processing program according to any one of claims 1 to 7, wherein
the generation process includes generating the simulation video based on the posture dictionary information in which the posture information indicating a posture of a joint group constituting the skeleton model and the music information indicating musical notation in a part corresponding to a melody other than the main melody of the existing musical composition are associated with each other, by changing the posture of the joint over time group according to the other melody.

9. The information processing program according to claim 8, wherein
the generation process includes generating the simulation video based on the posture dictionary information in which the posture information indicating a plurality of respective different postures of the joint group and the music information indicating a plurality of respective different chords in the part corresponding to the other melody are associated with each other, by changing the posture of the joint group over time according to the other melody.

10. The information processing program according to claim 8 or 9, wherein
the generation process includes generating the simulation video based on the posture dictionary information in which the posture information indicating an angle of a plurality of respective different joints constituting the joint group and the music information indicating a plurality of respective different notes constituting a chord in the part corresponding to the other melody are associated with each other, by changing the angle of the respective joints over time according to the other melody.

11. The information processing program according to any one of claims 8 to 10, wherein
the generation process includes generating the simulation video based on the posture dictionary information in which the posture information indicating a duration of maintaining a posture of the joint group and the music information indicating a duration of a sound of a note in the part corresponding to the other melody are associated with each other.

12. The information processing program according to any one of claims 8 to 11, wherein
the generation process includes generating the simulation video based on the posture dictionary information in which the posture information indicating a height of a center position of the joint group and the music information indicating a pitch of a sound of a note in the part of the other melody are associated with each other.

13. The information processing program according to any one of claims 8 to 12, wherein
the generation process includes generating the simulation video based on the posture dictionary information indicating a range of motion of a posture of the joint group and the music information indicating a range of pitch of a sound in the part of the other melody are associated with each other.

14. The information processing program according to any one of claims 1 to 13, wherein
the subject is a CG character generated by computer graphics, and
the generation process includes generating the simulation video based on the posture dictionary information in which the posture information indicating a key pose that is a specific posture of the CG character and the music information indicating musical notation at a predetermined timing in a horizontal axis of the musical score are associated with each other.

15. The information processing program according to claim 14, wherein
the generation process includes generating the simulation video by interpolating a posture between the two different key poses of the CG character based on an auxiliary symbol relating to articulation in the musical score.

16. The information processing program according to claim 14 or 15, wherein
the generation process includes further generating, based on camera-posture dictionary information in which camera posture information indicating a posture of a virtual camera corresponding to a viewpoint of a viewer that sees the CG character positioned in virtual space generated by computer graphics and music information indicating musical notation in a musical score corresponding to an existing musical composition are associated with each other, the simulation video from a viewpoint of the virtual camera by changing the posture of the virtual camera over time according to the musical score.

17. The information processing program according to any one of claims 1 to 16, wherein
the generation process includes
generating label information based on parameter information that has been used for simulation of the simulation video; and
generating ground truth data including the simulation video and the label information.

18. The information processing program according to claim 17, wherein
the generation process includes generating the label information based on subject identification information to identify the subject, position information of the subject, and posture information indicating a posture of a skeleton model expressing a skeleton of the subject as the parameter information.

19. The information processing program according to claim 17 or 18, wherein
the generation process includes generating an analysis model by training the analysis model such that the ground truth data is output from the analysis model when the simulation video is input to the analysis model.

20. The information processing program according to claim 19, the program causing a computer to execute
an estimation process of estimating subject identification information to identify the subject from a captured image in which the subject is captured, position information of the subject, and posture information indicating a posture of a skeleton model expressing a skeleton of the subject by using the analysis model generated by the generation process.

21. An information processing apparatus comprising
a generating unit that generates a simulation video showing a movement of the subject, based on posture dictionary information in which posture information indicating a posture of a skeleton model expressing a skeleton of a subject and music information indicating musical notation in a musical score corresponding to an existing musical composition are associated with each other, by changing the posture over time according to the musical score.

22. An information processing program to cause a computer to execute:
an acquisition process of acquiring an analysis model that is trained based on ground truth data including a simulation video showing a movement of a subject and label information generated based on parameter information, the simulation video generated based on posture dictionary information in which posture information indicating a posture of a skeleton model expressing a skeleton of the subject and music information indicating musical notation in a musical score corresponding to an existing musical composition are associated with each other, by changing the posture over time according to the musical score, the parameter information used for simulation of the simulation video; and
a generation process of generating a musical score, which is chronological data of musical notation corresponding to a posture of the skeleton model expressing the skeleton of the subject from a captured video in which the subject is captured by using the analysis model acquired by the acquisition process.

23. The information processing program according to claim 22, causing a computer to execute
an output control process of controlling to output a sound played based on the musical score that is generated by the generation process to a terminal device used by a manager of the subject.

24. The information processing program according to claim 23, wherein
the generation process includes generating the musical score when an abnormal behavior of the subject is detected, and
the output control process includes controlling to output an alert sound played based on the musical score generated by the generation process to the terminal device.

25. An information processing apparatus comprising:
an acquiring unit that acquires an analysis model trained based on ground truth data including a simulation video that shows a movement of a subject and label information that is generated based on parameter information used for simulation of the simulation video, the simulation video generated based on posture dictionary information in which posture information indicating a posture of a skeleton model expressing a skeleton of the subject and music information indicating musical notation in a musical score corresponding to an existing musical composition are associated with each other, by changing the posture over time according to the musical score; and
a generating unit that generates a musical score, which is chronological data of musical notation corresponding to the posture of the skeleton model expressing the skeleton of the subject from a captured video in which the subject is captured by using the analysis model acquired by the acquiring unit.
